(19) Europäisches Patentamt / European Patent Office / Office européen des brevets

(11) **EP 2 997 051 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**16.07.2025 Patentblatt 2025/29**

(45) Hinweis auf die Patenterteilung:
**26.08.2020 Patentblatt 2020/35**

(21) Anmeldenummer: **14723383.7**

(22) Anmeldetag: **29.04.2014**

(51) Internationale Patentklassifikation (IPC):
***C08F 20/06*** *(2006.01)* ***C08F 120/06*** *(2006.01)*
***C08F 220/06*** *(2006.01)* ***C08K 3/26*** *(2006.01)*
***C08L 33/02*** *(2006.01)*

(52) Gemeinsame Patentklassifikation (CPC):
**B01J 20/261; C08F 220/06; C08J 3/245;**
C08F 222/102; C08J 2333/02; C08K 5/0008

(86) Internationale Anmeldenummer:
**PCT/EP2014/058670**

(87) Internationale Veröffentlichungsnummer:
**WO 2014/183988 (20.11.2014 Gazette 2014/47)**

(54) **SUPERABSORBIERENDE POLYMERE MIT SCHNELLEN ABSORPTIONSEIGENSCHAFTEN SOWIE VERFAHREN ZU DESSEN HERSTELLUNG**

SUPERABSORBENT POLYMER WITH HIGH PERMEABILITY

POLYMÈRE SUPERABSORBANT PRÉSENTANT UNE PERMÉABILITÉ ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2013 DE 102013209023**

(43) Veröffentlichungstag der Anmeldung:
**23.03.2016 Patentblatt 2016/12**

(73) Patentinhaber: **Stockhausen Superabsorber GmbH**
**47805 Krefeld (DE)**

(72) Erfinder:
- **WATTEBLED, Laurent**
  **40589 Düsseldorf (DE)**
- **HENN, Markus**
  **45894 Gelsenkirchen (DE)**
- **TENI, Rainer**
  **47447 Moers (DE)**

(74) Vertreter: **Office Freylinger**
**P.O. Box 48**
**8001 Strassen (LU)**

(56) Entgegenhaltungen:

| | |
|---|---|
| **EP-A1- 0 744 435** | **EP-A1- 0 744 435** |
| **WO-A1-2012/143235** | **WO-A1-2012/143235** |
| **WO-A1-2013/072268** | **WO-A1-2013/072268** |
| **JP-A- H1 199 602** | **US-A1- 2005 137 546** |

- **MARKUS FRANK: "Ullmann’s Encyclopedia of Industrial Chemistry", 15 January 2003, WILEY-VCH VRELAG GMBH, Weinheim, DOI: 10.1002/14356007.f25_f01**

EP 2 997 051 B2

## Beschreibung

Die vorliegende Erfindung betrifft superabsorbierende Polymere mit schnellen Absorptionseigenschaften sowie ein Verfahren zu deren Herstellung.

Der aktuelle Trend im Windelaufbau geht dahin, noch dünnere Konstruktionen mit reduziertem Cellulosefaseranteil und erhöhtem Superabsorberanteil herzustellen. Der Vorteil dünnerer Konstruktionen zeigt sich nicht nur in einem verbesserten Tragekomfort, sondern auch in reduzierten Kosten bei Verpackung und Lagerhaltung. Mit dem Trend zu immer dünner werdenden Windelkonstruktionen hat sich das Anforderungsprofil an die Superabsorber deutlich verändert. Von entscheidender Bedeutung ist jetzt die Fähigkeit des Hydrogels zur Flüssigkeitsweiterleitung und -verteilung. Aufgrund der höheren Beladung des Hygieneartikels (Menge an Superabsorber pro Flächeneinheit) darf das Polymer im gequollenen Zustand keine Sperrschicht für nachfolgende Flüssigkeit bilden (Gel-Blocking). Weist das Produkt gute Transporteigenschaften auf, so kann eine optimale Ausnutzung des gesamten Hygieneartikels gewährleistet werden.

Neben der Permeabilität der Superabsorber (SAP) (angegeben in Form der sogenannten *"Saline Flow Conductivity* - SFC") und dem Absorptionsvermögen unter einer Druckbelastung ist insbesondere auch die Absorptionsgeschwindigkeit der Superabsorberpartikel (angegeben in Menge an absorbierter Flüssigkeit pro Gramm Superabsorber pro Sekunde) ein entscheidendes Kriterium, welches Aussagen darüber ermöglicht, ob ein diesen Superabsorber in großer Konzentration enthaltender absorbierender Kern, welcher nur einen geringen Fluffanteil aufweist, in der Lage ist, bei seinem ersten Kontakt mit Flüssigkeiten diese schnell zu absorbieren (sogenannte *"acquisition").* Diese *"aquisition"* ist bei absorbierenden Kernen mit hohem Superabsorberanteil unter anderem von der Absorptionsgeschwindigkeit des Superabsorbermaterials abhängig.

Aus dem Stand der Technik sind unterschiedliche Schutzrechte bekannt die eine Erhöhung der Absorptionsgeschwindigkeit von Superabsorberpartikel ermöglichen sollen. Aus der WO96/17884A1 ist ein wasserabsorbierendes Harz bekannt in dessen Monomerlösung ein festes Treibmittel mit einem Teilchendurchmesser von 1 bis 100 μm eingesetzt wird. Grundsätzlich werden organische Azoverbindungen bevorzugt und hier im Speziellen Acrylsäuresalze von einer Aminogruppe enthaltende Azoverbindungen. Reine Carbonate, Ammoniumnitrid oder Mischungen hieraus können gegebenenfalls verwendet werden.

Nachteilig ist hierbei der schnelle Umsatz der Azoverbindungen als auch das grundsätzliche Dispergieren der kleinen festen Partikel in der Monomerlösung. Größere Partikel können nicht gut dispergiert werden, ohne dass es zu einer Trennung von Partikeln und Monomerenlösung in der Dispersion vor dem Gelpunkt kommt.

Nachteilig hierbei ist bei der Verwendung von Superabsorbern, die aus dem Stand der Technik bekannt sind, dass Leckage-Probleme auftreten, da der SAP entweder die Flüssigkeit zu langsam aufnimmt und/oder über einen ungeeigneten Flüssigkeitstransport verfügt.

Der aktuelle Trend insbesondere im Windelaufbau geht dahin, noch dünnere absorbierende Kerne mit reduziertem Cellulosefaseranteil und erhöhtem Superabsorberanteil herzustellen. Der Vorteil dünnerer Konstruktionen zeigt sich nicht nur in einem verbesserten Tragekomfort, sondern auch in reduzierten Kosten bei Verpackung und Lagerhaltung. Die neuste Generation von absorbierenden Kernen, die beispielsweise in der WO-A-2008/155722, WO-A-2008/155711, WO-A-2008/155710, WO-A-2008/155702, WO-A-2008/155701, WO-A-2008/155699, EP-A-1 225 857, WO-A-01/15647, WO-A-2011/120504, DE-A-10 2009 049 450, WO-A-2008/117109, WO-A-97/11659, EP-A-0 826 349, WO-A-98/37846, WO-A-95/11653, WO-A-95/11651, WO-A-95/11652, WO-A-95/11654, WO-A-2004/071363 oder WO-A-01/89439 beschrieben wird, ist im wesentlichen Cellulose-frei (weswegen entsprechende Windeln auch als *"fluffless diaper"* bezeichnet werden). Die Immobilisierung der Superabsorberpartikel, die in cellulosehaltigen absorbierenden Kernen durch die Cellulosefasern erfolgt, kann in dieser neuesten Generation absorbierender Kerne dadurch realisiert werden, dass beispielsweise die Superabsorberpartikel mittels thermoplastischer Fasern auf einer Substratoberfläche immobilisiert werden.

Mit dem Trend zu immer dünner werdenden Windelkonstruktionen und dem Wegfall der temporären Flüssigkeitsspeicherungs- und Weiterleitungsfunktion der Cellulosefasern hat sich das Anforderungsprofil an die Superabsorber deutlich verändert. Von entscheidender Bedeutung ist jetzt die Fähigkeit des Hydrogels, das Auslaufen (Leakage) von Urin direkt bei der Miktion zu verhindern. Dies wird durch die Eigenschaft des Superabsorbers/Hydrogels erreicht, die Flüssigkeit während der Quellung effektiv aufzunehmen und in der Gelschicht zu verteilen, bei gleichzeitiger Minimierung der Menge ungebundenen Urins in der Windel. Vorteilhafte Superabsorber führen aufgrund von guten Transporteigenschaften auch zu einer optimalen Ausnutzung des gesamten Hygieneartikels.

Aus der US 5,154,713 sind wasserabsorbierende Polymere bekannt die mittels eines Carbonat-Treibmittels in der Monomerlösung hergestellt werden. Hierbei erfolgt das Einbringen der Carbonatpartikel in die Monomerlösung deutlich vor der eigentlichen Polymerisation, und der Initiatorzugabe von 5 bis 15 Minuten nach dem Dispergieren des Carbonat-Treibmittels, wodurch eine gleichmäßige Verteilung dieser Carbonatpartikel nicht mehr gewährleistet ist und ein nicht unerheblicher Teil des Carbonats gegebenenfalls schon wieder ausgetragen ist.

Aus der EP0644207 sind superabsorbierende Polymere bekannt die ebenfalls mit einem organischen Carbonattreibmittel in der Monomerlösung versetzt werden. Nachteilig ist hier die Verwendung von Aminverbindungen als auch

der Verbleib der Abspaltprodukte der organischen Carbonate im Superabsorber.

EP 0 744 435 A1 offenbart ein Verfahren zur Herstellung einer wasserabsorbierenden Polymerzusammensetzung mit Blähmitteln und Tensiden.

Aus der WO 2010/095427 sind wasserabsorbierende Polymere bekannt, in denen in die Monomerlösung ein Gas dispergiert wird. Hierbei handelt es sich um Stickstoff, Argon, Helium, Kohlendioxid oder ähnliche, wodurch eine porösere Struktur gewährleistet werden soll. Diese Mikrobläschen sollen mittels Polyoxyethylen-(20)-Sorbitanmonostearat solange in der Monomerlösung gehalten werden bis die Polymerisation einsetzt. Nachteilig ist hierbei, dass die Tenside wieder aus dem Endprodukt ausgewaschen werden können und die Perfomance negativ beeinflußen.

Von entscheidender Bedeutung ist jetzt die Fähigkeit des Hydrogels, das Auslaufen (Leakage) von Urin direkt bei der Miktion zu verhindern. Dies wird durch die Eigenschaft des Superabsorbers/Hydrogels erreicht, die Flüssigkeit während der Quellung effektiv aufzunehmen und in der Gelschicht zu verteilen, bei gleichzeitiger Minimierung der Menge ungebundenen Urins in der Windel. Vorteilhafte Superabsorber führen aufgrund von guten Transporteigenschaften auch zu einer optimalen Ausnutzung des gesamten Hygieneartikels. Unter dem Begriff "Rewet" wird im Allgemeinen die Eigenschaft eines Superabsobers oder eines Verbundes der einen Superabsorber enthält, verstanden, unter Druckbelastung an eine saugfähige Lage Flüssigkeit abzugeben. Unter dem Begriff "saugfähige Lage" werden z. B. Papier, Filterpapier, Collagen, Schwämme. Schäume oder Ähnliche verstanden.

Aus der EP1858998B1 sind superabsorbierende Schäume bekannt, bei denen die Monomerlösung nur unter erhöhtem Druck von 12 bar durch Zugabe von Kohlendioxid und Tensiden einen Schaum ergibt.

Die bisher aus dem Stand der Technik bekannten Superabsorber sind jedoch nur unzureichend für einen Einsatz in der vorstehend beschriebenen neuen Generation von cellulosefreien Windelkonstruktionen geeignet.

Allgemein liegt der vorliegenden Erfindung die Aufgabe zu Grunde, die sich aus dem Stand der Technik ergebenden Nachteile zu überwinden.

Es ist insbesondere die Aufgabe der vorliegenden Erfindung, ein Verfahren zur Herstellung eines wasserabsorbierenden Polymeren zur Verfügung zu stellen, das eine verbesserte Quellgeschwindigkeit und schnellere Aufnahme von Flüssigkeiten aufweist unter gleichzeitiger Beibehaltung der Gesamtqualität und insbesondere einer hohen Permeabilität.

Außerdem ist es eine weitere Aufgabe das Verfahren in ökonomisch einfacher Weise durchzuführen, wobei die Verwendung von organischen Additiven minimiert wird, als auch eine drucklose Arbeitsweise gewährleistet werden soll.

Es ist insbesondere eine Aufgabe der vorliegenden Erfindung, ein Verfahren bereitzustellen, nach dem wasserabsorbierende Polymere hergestellt werden können, wobei eine besonders hohe Quellgeschwindigkeit gewährleistet werden kann.

Eine weitere Aufgabe der vorliegenden Erfindung besteht zusätzlich darin, ein Verfahren bereit zu stellen, nach dem wasserabsorbierende Polymere hergestellt werden können die einen schnellen und aktiven Flüssigkeitstransport, z.B. in dünnen Windeln gewährleisten, so dass eine schnelle Aufnahme und eine gute Verteilung, d. h. eine entsprechende Kapillarität gewährleistet wird.

Eine weitere Aufgabe der Erfindung besteht vornehmlich darin, ein wasserabsorbierendes Polymer, Verbunde, die derartige wasserabsorbierende Polymere enthalten, und chemische Produkte, die derartige wasserabsorbierende Polymere oder Verbunde enthalten, anzugeben, wobei die wasserabsorbierenden Polymeren eine erhöhte Absorptionsgeschwindigkeit für wässrige Lösungen aufweisen.

Diese Aufgaben werden gelöst durch den Gegenstand der kategoriebildenden Ansprüche. Vorteilhafte Ausgestaltungen und Weiterbildungen, die einzeln oder in Kombination auftreten können, sind Gegenstand der jeweils abhängigen Ansprüche.

Ein Beitrag zur Lösung der eingangs genannten Aufgabe leistet das Verfahren zur Herstellung nach Anspruch 1.

In dem Verfahren wird bevorzugt im Schritt (iii) oder vor dem Schritt (v) mindestens eine saure Verbindung, aus der Gruppe von Essigsäureanhydrid, Maleinsäureanhydrid, Fumarsäureanhydrid, Benzoesäure, Ameisensäure, Valeriansäure, Zitronensäure, Glyoxylsäure, Glykolsäure, Glycerinphosphorsäure, Glutarsäure, Chloressigsäure, Chlorpropionsäure, Zimtsäure, Bernsteinsäure, Essigsäure, Weinsäure, Brenztraubensäure, Fumarsäure, Propionsäure, 3-Hydroxy-propionsäure, Malonsäure, Buttersäure, Isobuttersäure, Imidinoessigsäure, Apfelsäure, Isethionsäure, Methylmaleinsäure, Adipinsäure, Itaconsäure, Crotonsäure, Oxalsäure, Salizylsäure, Gluconsäure, Gallussäure, Sorbinsäure, Gluconsäure und p-Oxybenzoesäure, Weinsäure, Säureanhydride, wie etwa $P_2O_5$, $SO_2$, $N_2O$, oder HCl, Mischungen dieser oder deren Salze zugesetzt.

Bevorzugt werden als Salze solche aus der Gruppe der Phosphorsäure und Zitronensäure
alleine oder in Mischungen mit den anderen Salzen oder organischen Säuren zugesetzt.

Vorteilhafterweise wir durch die Verwendung der sauren Verbindung bevorzugt im Verfahrensschritt der Nachvernetzung eine überraschende Verbesserung des FSR-Wertes erreicht, der zu einer Erhöhung der Absorptionsgeschwindigkeit führt. Vorteilhafterweise wurde ebenfalls gefunden, dass die Absorptionsgeschwindigkeitserhöhung auch ohne Zugabe des Tensids ermöglicht wird.

Als Blähmittel können alle Carbonate aus der Gruppe von Lithium-, Natrium-, Kalium-, Rubidium-, Cäsiumcarbonat, oder höherwertige Metallionen wie Beryllium-, Calcium-, Magnesium-, Strontiumcarbonat oder Mischungen dieser verwendet werden. Als weitere Verbindungen können auch granulierte Carbonate eingesetzt werden, die auch als Mischsalze aus einem Carbonat und/oder Percarbonat mit einem weiteren als Deckschicht fungierenden Salz wie z. B. einer Sulfatverbindung hergestellt werden. Erfindungsgemäß weisen die Blähmittel eine Partikelgröße von 10 $\mu$m bis 900 $\mu$m, bevorzugt 50 $\mu$m bis 500 $\mu$m und besonders bevorzugt von 100 $\mu$m bis 450 $\mu$m auf.

Massgeschneiderte Tenside werden für die Herstellung der erfindungsgemäßen Superabsorber zu der Monomeren Lösung zugesetzt. Diese speziellen Tenside enthalten funktionelle Gruppen, die polymerisierbar sind. Es handelt sich erfindungsgemäß um ungesättigte Polyether Copolymere die aus eher hydrophilen Ethylenglykol-Einheiten und eher hydrophoben Alkylenglykol-Einheiten mit 3 bis 6 C-Atomen aufgebaut sind. Die ungesättigten Polyether können in Kombination mit Ethylenglykol-Einheiten eine oder mehrere voneinander verschiedene Alkylenglykol-Einheiten enthalten. Bevorzugt werden, Propylenglykol (z.B. 1,2- oder 1,3-Propandiol), Butylenglykol (z.B. 1,2-, 1,3- oder 1,4-Butandiol), Pentylenglykol (z.B. 1,5-Pentandiol, 1,2-Pentandiol, 1,3-Pentandiol, 1,4-Pentandiol, 2,3-Pentandiol, 2,4-Pentandiol oder 2,5-Pentandiol) oder Hexylenglykol (z.B. 1,6-Hexandiol). Die Alkylenglykol-Einheiten können im Tensid statistisch, blockartig oder als Gradient verteilt sein. Im Rahmen der vorliegenden Erfindung kann es sich bei den einzelnen Alkylenglykol-Einheiten um isotaktische, syndiotaktische oder ataktische Abfolgen der Konfiguration in dem Molekül handeln.

Der Polymerisationsgrad der Polyether Struktur des Tensids liegt im Allgemeinen im Bereich von 2 bis 100, vorzugsweise im Bereich von 4 bis 50, besonders bevorzugt im Bereich von 6 bis 20. Die angegebenen Alkoxylierungsgrade beziehen sich dabei jeweils auf den mittleren Alkoxylierungsgrad. Selbstverständlich liegen herstellungsbedingt in der Regel Gemische vor, in denen zusätzlich niedere und höhere Oligomere enthalten sein können.

Die ungesättigte Gruppe kann eine Vinyl Ether-, (Meth)allyl Ether-, 4-vinylbenzyl Ether-, (Meth)acrylamid-, Methacryl Ester- oder Acryl Ester Gruppe sein und steht bevorzugt am Kettenende.

Als polymerisiebare Tenside sind auch Ester von Polyether Copolymere und Ethacrylsäure, $\alpha$ -Chloracrylsäure, $\alpha$-Cyanoacrylsäure, $\beta$-Methylacrylsäure (Crotonsäure), $\alpha$-Phenylacrylsäure, $\beta$-Acryloxypropionsäure, Sorbinsäure, $\alpha$-Chlorsorbinsäure, 2'-Methylisocrotonsäure, Zimtsäure, p-Chlorzimtsäure, $\beta$-Stearylsäure, Itaconsäure, Citraconsäure, Mesaconsäure, Glutaconsäure, Aconitsäure, Maleinsäure, Fumarsäure, Tricarboxyethylen und Maleinsäureanhydrid einsetzbar.

Des Weiteren können Ester von Polyether Copolymere und Allylsulfonsäure oder aliphatische oder aromatische Vinylsulfonsäuren oder acrylische oder methacrylische Sulfonsäuren, wobei als aliphatische oder aromatische Vinylsulfonsäuren beispielhaft Vinylsulfonsäure, 4-Vinylbenzylsulfonsäure, Vinyltoluolsulfonsäure oder Stryrolsulfonsäure, Acryl- oder Methacrylsulfonsäuren aus der Gruppe von. Sulfoethyl(meth)acrylat, Sulfopropyl(meth)acrylat, 2-Hydroxy-3-methacryloxypropylsulfonsäure, (Meth)Acrylamidoalkylsulfonsäuren aus der Gruppe von 2-Acrylamido-2-methylpropansulfonsäure, Phosphonsäuremonomere aus der Gruppe der Vinylphosphonsäure, Allylphosphonsäure, Vinylbenzylphosponsäure, (Meth)acrylamidoalkylphosphonsäuren, Acrylamidoalkyldiphosphonsäuren, phosponomethylierte Vinylamine und (Meth)acrylphosphonsäurederivate, oder Acrylamide und Methacrylamide aus der Gruppe von alkylsubstituierte (Meth)acrylamide oder aminoalkylsubstituierte Derivate des (Meth)acrylamids aus der Gruppe von N-Methylol(meth) acrylamid Vinylamide aus der Gruppe von N-Vinylamid, N-Vinylformamid, N-Vinylacetamid, N-Vinyl-N-Methylacetamid, N-Vinyl-N-methylformamid verwendet werden.

Am anderen Kettenende der Polyethern befindet sich eine Hydroxylgruppe, eine mit einem Organyl Rest R-veretherte Hydroxylgruppe oder der mit einem Acylrest der allgemeine Struktur R-(C=O)- veresterte Hydroxylgruppe, wobei der Organyl Rest R- ein $C_1$- bis $C_{10}$-Alkylgruppe oder ein $C_6$- bis $C_{10}$ -Alkylarylgruppe ist und linear oder verzweigt sein kann. Bevorzugt sind Hydroxylgruppe, veretherte Hydroxylgruppe mit Methyl-, Ethyl- n-Propyl-, iso-Propyl-, n-Butyl-, iso-Butyl-, n-Pentyl-, 2-Methyl-Butyl-, 2,2-Dimethylpropyl-, sowie n-Hexyl, n-Heptyl., n-Octyl, n- Nonyl ,n-Decyl oder die Isomeren dieser Verbindungen als Alkylreste.

Besonders bevorzugt sind Tenside der folgenden Formel:

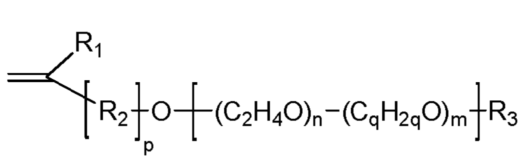

Worin die Alkylenglykol-Einheiten ($C_2H_4O$) und ($C_qH_{2q}O$) statistisch, blockartig oder als Gradient verteilt sein können und

$R^1$ -H oder -$CH_3$
$R^2$ eine -C=O- Gruppe oder eine Alkylengruppe aus der Gruppe von Methylen oder Ethylen,
$R^3$ für -H, linear oder verzweigt $C_1$- bis $C_9$-Alkyl oder $C_6$- bis $C_9$-Alkylaryl steht,
p = 0 oder 1,

q für eine Zahl von 3 bis 4 und
n und m eine Zahl von 1 bis 20 bedeutet.

Besonders bevorzugt sind statistische oder Gradienten-Strukturen wie z.B. hydroxyfunktionellen Tensiden wie Blemmer®50PEP-300 (Polyalkylenglykolmonomethacrylate; 3,5 Ethylenglykoleinheiten und 2,5 Propylenglykoleinheiten), Blemmer®55PET-800 (Polyalkylenglykolmonomethacrylate; 10 Ethylenoglykoleinheiten und 5 Butylenglykoleinheiten),

In einer weiteren bevorzugten Ausführungsform werden Block-Strukturen wie z. B. Blemmer®70PEP-350B (Polyalkylenglykolmonomethacrylate; 5 Ethylenglykoleinheiten und 2 terminale Propylenglykoleinheiten), alle der NOF Corporation (Japan) sowie PE 7316/02 (Polyalkylenglykolmonoallylether, (6 Ethylenglykoleinheiten und 6 terminale Propylenglykoleinheiten) Evonik Industries AG) eingesetzt.

Des Weiteren seien beispielhaft für die Block-Copolymere polymerisierbaren Tenside mit einem Alkylether Rest, wie folgt aufgezählt: Methoxy-Polyalkylenglykolmono(meth)acrylate (6 Ethylenglykoleinheiten und 6 terminale Propylenglykoleinheiten; sowohl 7,5 Ethylenglykoleinheiten und 3 terminale Propylenglykoleinheiten) und Butoxy-Polyalkylenglykolmono(meth)acrylate (4 Propylenglykoleinheiten und 7 terminale Ethylenglykoleinheiten) der Evonik Industries AG.

In einer weiteren Ausführungsform können die allylischen Tenside auch in einer statistischen Struktur vorliegen wie z.B. (Polyalkylenglykolmonoallylether; 7 Ethylenglykoleinheiten und 3 Propylenglykoleinheiten) (PE8482 Evonik Industries AG) und Pluriol® A23 R (BASF) .

Vorteilhafterweise werden die Tenside im Allgemeinen zeitgleich mit dem Vernetzer eingesetzt. Das Blähmittel wird in einer Ausführungsform nach der Zugabe des Tensides zugegeben. In weiteren Ausführungsformen kann das Blähmittel zeitgleich oder vor dem Tensid zugeführt werden.

Bei der Zugabe von Blähmitteln bzw. Soda entstehen Bläschen, die in Anwesenheit von Tensiden einen kleineren Durchmesser aufweisen

Vorteilhafterweise stabilisieren die Tenside die große Gasoberfläche, die in der Lösung durch das Blähmittel entsteht. Durch die parallel ablaufende Polymerisation wird eine fein porige Struktur fixiert (poröses Gel). Die Tenside werden während der Polymerisation "inaktiviert" d.h. sie können (sich) im Polymer Netzwerk einbauen bzw. werden aufgrund ihrer reaktiven Funktionalität eingebaut.

Die monoethylenisch ungesättigten, säuregruppenhaltigen Monomere ($\alpha$1) können teilweise oder vollständig, bevorzugt teilweise neutralisiert sein. Vorzugsweise sind die monoethylenisch ungesättigten, säuregruppenhaltigen Monomere zu mindestens 10 Mol-%, besonders bevorzugt zu mindestens 25 bis 50 Mol-% und darüber hinaus bevorzugt zu 50-90 Mol-% neutralisiert. Die Neutralisation der Monomere ($\alpha$1) kann vor, aber auch nach der Polymerisation erfolgen. Hierbei erfolgt die Teilneutralisierung zu mindestens 10 Mol-%, besonders bevorzugt zu mindestens 25 bis 90 Mol-% und darüber hinaus bevorzugt zu 50-80 Mol-%. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak oder mit Alkalimetallhydroxiden, besonders bevorzugt mit Natriumhydroxid oder mit Ammoniak.

Ferner können bei einem Polymer die freien Säuregruppen überwiegen, so dass dieses Polymer einen im sauren Bereich liegenden pH-Wert aufweist. Dieses saure wasserabsorbierende Polymer kann durch ein Polymer mit freien basischen Gruppen, vorzugsweise Amingruppen, das im Vergleich zu dem sauren Polymer basisch ist, mindestens teilweise neutralisiert werden. Diese Polymere werden in der Literatur als "*Mixed-Bed Ion-Exchange Absorbent Polymers*" (MBIEA-Polymere) bezeichnet und sind unter anderem in der WO 99/34843 offenbart. Die Offenbarung der WO 99/34843 wird hiermit als Referenz eingeführt und gilt somit als Teil der Offenbarung. In der Regel stellen MBIEA-Polymere eine Zusammensetzung dar, die zum einen basische Polymere, die in der Lage sind, Anionen auszutauschen, und andererseits ein im Vergleich zu dem basischen Polymer saures Polymer, das in der Lage ist, Kationen auszutauschen, beinhalten. Das basische Polymer weist basische Gruppen auf und wird typischerweise durch die Polymerisation von Monomeren erhalten, die basische Gruppen oder Gruppen tragen, die in basische Gruppen umgewandelt werden können. Bei diesen Monomeren handelt es sich vor allen Dingen um solche, die primäre, sekundäre oder tertiäre Amine oder die entsprechenden Phosphine oder mindestens zwei der vorstehenden funktionellen Gruppen aufweisen. Zu dieser Gruppe von Monomeren gehören insbesondere Ethylenamin, Allylamin, Diallylamin, 4-Aminobuten, Alkyloxycycline, Vinylformamid, 5-Aminopenten, Carbodiimid, Formaldacin, Melamin und dergleichen, sowie deren sekundäre oder tertiäre Aminderivate.

Bevorzugte monoethylenisch ungesättigte, säuregruppenhaltige Monomere ($\alpha$1) sind Acrylsäure, Methacrylsäure, Ethacrylsäure, $\alpha$-Chloracrylsäure, $\alpha$-Cyanoacrylsäure, $\beta$-Methylacrylsäure (Crotonsäure), $\alpha$-Phenylacrylsäure, $\beta$-Acryloxypropionsäure, Sorbinsäure, $\alpha$ -Chlorsorbinsäure, 2'-Methylisocrotonsäure, Zimtsäure, p-Chlorzimtsäure, $\beta$-Stearylsäure, Itaconsäure, Citraconsäure, Mesaconsäure, Glutaconsäure, Aconitsäure, Maleinsäure, Fumarsäure, Tricarboxyethylen und Maleinsäureanhydrid, wobei Acrylsäure sowie Methacrylsäure besonders und Acrylsäure darüber

hinaus bevorzugt sind.

Neben diesen carboxylatgruppenhaltigen Monomeren sind als monoethylenisch ungesättigte, säuregruppenhaltige Monomere (α1) des Weiteren ethylenisch ungesättigte Sulfonsäuremonomere oder ethylenisch ungesättigte Phosphonsäuremonomere bevorzugt.

Als ethylenisch ungesättigte Sulfonsäuremonomere sind Allylsulfonsäure oder aliphatische oder aromatische Vinylsulfonsäuren oder acrylische oder methacrylische Sulfonsäuren bevorzugt. Als aliphatische oder aromatische Vinylsulfonsäuren sind Vinylsulfonsäure, 4-Vinylbenzylsulfonsäure, Vinyltoluolsulfonsäure und Stryrolsulfonsäure bevorzugt. Als Acryl- bzw. Methacrylsulfonsäuren sind Sulfoethyl(meth)acrylat, Sulfopropyl(meth)acrylat, 2-Hydroxy-3-methacryloxypropylsulfonsäure sowie (Meth)Acrylamidoalkylsulfonsäuren wie 2-Acrylamido-2-methylpropansulfonsäure bevorzugt.

Als ethylenisch ungesättigte Phosphonsäuremonomere sind Vinylphosphonsäure, Allylphosphonsäure, Vinylbenzylphosponsäure, (Meth)acrylamidoalkylphosphonsäuren, Acrylamidoalkyldiphosphonsäuren, phosponomethylierte Vinylamine und (Meth)acrylphosphonsäurederivate bevorzugt.

Als ethylenisch ungesättigte, einen protonierten Stickstoff enthaltende Monomere (α1) sind vorzugsweise Dialkylaminoalkyl(meth)acrylate in protonierter Form, beispielsweise Dimethylaminoethyl(meth)acrylat-Hydrochlorid oder Dimethylaminoethyl(meth)acrylat-Hydrosulfat, sowie Dialkylaminoalkyl-(meth)acrylamide in protonierter Form, beispielsweise Dimethylaminoethyl(meth)acrylamid-Hydrochlorid, Diemethylaminopropyl(meth)acrylamid-Hydrochlorid, Diemethylaminopropyl(meth)acrylamid-Hydrosulfat oder Dimethylaminoethyl-(meth)acrylamid-Hydrosulfat bevorzugt.

Als ethylenisch ungesättigte, einen quarternierten Stickstoff enthaltende Monomere (α1) sind Dialkylammoniumalkyl(meth)acrylate in quarternisierter Form, beispielsweise Trimethylammoniumethyl(meth)acrylat-Methosulfat oder Dimethylethylammoniumethyl(meth)acrylat-Ethosulfat sowie (Meth)acrylamido-alkyldialkylamine in quarternisierter Form, beispielsweise (Meth)acrylamidopro- pyltrimethylammoniumchlorid, Trimethylammoniumethyl(meth)acrylat-Chlorid oder (Meth)acrylamidopropyltrimethylammoniumsulfat bevorzugt.

Als monoethylenisch ungesättigte, mit (α1) copolymerisierbare Monomere (α2) sind Acrylamide und Methacrylamide bevorzugt.

Bevorzugte (Meth)acrylamide sind neben Acrylamid und Methacrylamid alkylsubstituierte (Meth)acrylamide oder aminoalkylsubstituierte Derivate des (Meth)acrylamids, wie N-Methylol(meth)acrylamid, N,N-Dimethylamino(meth)-acrylamid, Dimethyl(meth)acrylamid oder Diethyl(meth)acrylamid Mögliche Vinylamide sind beispielsweise N-Vinylamide, N-Vinylformamide, N-Vinylacetamide, N-Vinyl-N-Methylacetamide, N-Vinyl-N-methylformamide, Vinylpyrrolidon. Unter diesen Monomeren besonders bevorzugt ist Acrylamid.

Des Weiteren sind als monoethylenisch ungesättigte, mit (α1) copolymerisierbaren Monomere (α2) in Wasser dispergierbare Monomere bevorzugt. Als in Wasser dispergierbare Monomere sind Acrylsäureester und Methacrylsäurester, wie Methyl(meth)acrylat, Ethyl(meth)acrylat, Propyl(meth)acrylat oder Butyl(meth)acrylat, sowie Vinylacetat, Styrol und Isobutylen bevorzugt.

Erfindungsgemäß bevorzugte Vernetzer (α3) sind Verbindungen, die mindestens zwei ethylenisch ungesättigte Gruppen innerhalb eines Moleküls aufweisen (Vernetzerklasse I), Verbindungen, die mindestens zwei funktionelle Gruppen aufweisen, die mit funktionellen Gruppen der Monomeren (α1) oder (α2) in einer Kondensationsreaktion (=Kondensationsvernetzer), in einer Additionsreaktion oder in einer Ringöffnungsreaktion reagieren können (Vernetzerklasse II), Verbindungen, die mindestens eine ethylenisch ungesättigte Gruppe und mindestens eine funktionelle Gruppe, die mit funktionellen Gruppen der Monomeren (α1) oder (α2) in einer Kondensationsreaktion, in einer Additionsreaktion oder in einer Ringöffnungsreaktion reagieren kann (Vernetzerklasse III), aufweisen, oder polyvalente Metallkationen (Vernetzerklasse IV). Dabei wird durch die Verbindungen der Vernetzerklasse I eine Vernetzung der Polymere durch die radikalische Polymerisation der ethylenisch ungesättigten Gruppen des Vernetzermoleküls mit den monoethylenisch ungesättigten Monomeren (α1) oder (α2) erreicht, während bei den Verbindungen der Vernetzerklasse II und den polyvalenten Metallkationen der Vernetzerklasse IV eine Vernetzung der Polymere durch Kondensationsreaktion der funktionellen Gruppen (Vernetzerklasse II) bzw. durch elektrostatische Wechselwirkung des polyvalenten Metallkations (Vernetzerklasse IV) mit den funktionellen Gruppen der Monomere (α1) oder (α2) erreicht wird. Bei den Verbindungen der Vernetzerklasse III erfolgt dementsprechend eine Vernetzung des Polymers sowohl durch radikalische Polymerisation der ethylenisch ungesättigten Gruppe als auch durch Kondensationsreaktion zwischen der funktionellen Gruppe des Vernetzers und den funktionellen Gruppen der Monomeren (α1) oder (α2).

Bevorzugte Verbindungen der Vernetzerklasse I sind Poly(meth)acrylsäureester, die beispielsweise durch die Umsetzung eines Polyols, wie beispielsweise Ethylenglykol, Propylenglykol, Trimethylolpropan, 1,6-Hexandiol, Glycerin, Pentaerythrit, Polyethylenglykol oder Polypropylenglykol, eines Aminoalkohols, eines Polyalkylenpolyaminens, wie beispielsweise Diethylentriamin oder Triethylentetraamin, oder eines alkoxylierten Polyols mit Acrylsäure oder Methacrylsäure gewonnen werden. Als Verbindungen der Vernetzerklasse I sind des Weiteren Polyvinylverbindungen, Poly(meth) allyverbindungen, (Meth)acrylsäureester einer Monovinylverbindung oder (Meth)acrylsäureester einer Mono(meth)allylverbindung, vorzugsweise der Mono(meth)allylverbindungen eines Polyols oder eines Aminoalkohols, bevorzugt. In

diesem Zusammenhang wird auf DE 195 43 366 und DE 195 43 368 verwiesen. Die Offenbarungen werden hiermit als Referenz eingeführt und gelten somit als Teil der Offenbarung.

Als Verbindungen der Vernetzerklasse I seien als Beispiel genannt Alkenyldi(meth)acrylate, beispielsweise Ethylenglykoldi(meth)acrylat, 1,3-Propylenglykoldi(meth)acrylat, 1,4-Butylenglykoldi(meth)acrylat, 1,3-Butylenglykoldi(meth)acrylat, 1,6-Hexandioldi(meth)acrylat, 1,10-Decandioldi(meth)acrylat, 1,12-Dodecandioldi(meth)acrylat, 1,18-Octadecandioldi(meth)-acrylat, Cyclopentandioldi(meth)acrylat, Neopentylglykoldi(meth)acrylat, Methylendi-(meth)acrylat oder Pentaerythritdi(meth)acrylat, Alkenyldi(meth)acrylamide, beispielsweise N-Methyldi(meth)acrylamid, N,N'-3-Methylbutylidenbis(meth)acrylamid, N,N'-(1,2-Di-hydroxyethylen)bis(meth)acrylamid, N,N'-Hexamethylenbis(meth)acryl-acrylamid oder N,N'-Methylenbis(meth)acrylamid, Polyalkoxydi(meth)acrylate, beispielsweise Diethylenglykoldi-(meth)acrylat, Triethylenglykoldi(meth)acrylat, Tetraethylenglykoldi(meth)acrylat, Dipropylenglykoldi(meth)acrylat, Tripropylenglykoldi(meth)acrylat oder Tetrapropylenglykoldi-(meth)acrylat, Bisphenol-A-di(meth)acrylat, ethoxyliertes Bisphenol-A-di(meth)acrylat, Benzylidindi(meth)acrylat, 1,3-Di(meth)acryloyloxy-propanol-2, Hydrochinondi(meth)acrylat, Di(meth)acrylatester des vorzugsweise mit 1 bis 30 Mol Alkylenoxid pro Hydroxylgruppe oxyalkylierten, vorzugsweise ethoxylierten Trimethylolpropans, Thioethylenglykoldi(meth)-acrylat, Thiopropylenglykoldi(meth)acrylat, Thiopolyethylenglykoldi(meth)acrylat, Thiopolypropylenglykoldi(meth)acrylat, Divinylether, beispielsweise 1,4-Butandioldivinylether, Divinylester, beispielsweise Divinyladipat, Alkandiene, beispielsweise Butadien oder 1,6-Hexadien, Divinylbenzol, Di(meth)allylverbindungen, beispielsweise Di(meth)allylphthalat oder Di(meth)allylsuccinat, Homo- und Copolymere von Di(meth)allyldimethylammoniumchlorid und Homo- und Copolymere von Diethyl(meth)allyl- aminomethyl(meth) acrylatammoniumchlorid, Vinyl-(meth)acryl-Verbindungen, beispielsweise Vinyl(meth)acrylat, (Meth)allyl-(meth)acryl-Verbindungen, beispielsweise (Meth)allyl(meth)acrylat, mit 1 bis 30 Mol Ethylenoxid pro Hydroxylgruppe ethoxyliertes (Meth)allyl(meth)acrylat, Di(meth)allylester von Polycarbonsäuren, beispielsweise Di(meth)allylmaleat, Di(meth)allyfumarat, Di(meth)allylsuccinat oder Di(meth)allylterephthalat, Verbindungen mit 3 oder mehr ethylenisch ungesättigten, radikalisch polymerisierbaren Gruppen wie beispielsweise Glycerintri(meth)acrylat, (Meth)acrylatester des mit vorzugsweise 1 bis 30 Mol Ethylenoxid pro Hydroxylgruppe oxyethylierten Glycerins, Trimethylolpropantri(meth)acrylat, Tri(meth) acrylatester des vorzugsweise mit 1 bis 30 Mol Alkylenoxid pro Hydroxylgruppe oxyalkylierten, vorzugsweise ethoxylierten Trimethylolpropans, Trimethacrylamid, (Meth)allylidendi(meth)acrylat, 3-Allyloxy-1,2-propandioldi(meth)acrylat, Tri-(meth)allylcyanurat, Tri(meth)allylisocyanurat, Pentaerythrittetra(meth)acrylat, Pentaerythrittri(meth)acrylat, (Meth)acrylsäureester des mit vorzugsweise 1 bis 30 Mol Ethylenoxid pro Hydroxylgruppe oxyethylierten Pentaerythrits, Tris(2-hydroxyethyl)isocyanurattri(meth)acrylat, Trivinyltrimellitat, Tri(meth)allylamin, Di(meth)allylalkylamine, beispielsweise Di(meth)allylmethylamin, Tri-(meth)allylphosphat, Tetra(meth)allylethylendiamin, Poly(meth)allylester, Tetra(meth)allyloxiethan oder Tetra(meth)allylammoniumhalide.

Als Verbindung der Vernetzerklasse II sind Verbindungen bevorzugt, die mindestens zwei funktionelle Gruppen aufweisen, die in einer Kondensationsreaktion (=Kondensaionsvernetzer), in einer Additionsreaktion oder in einer Ringöffnungsreaktion mit den funktionellen Gruppen der Monomere ($\alpha$1) oder ($\alpha$2), bevorzugt mit Säuregruppen, der Monomeren ($\alpha$1), reagieren können. Bei diesen funktionellen Gruppen der Verbindungen der Vernetzerklasse II handelt es sich vorzugsweise um Alkohol-, Amin-, Aldehyd-, Glycidyl-, Isocyanat-, Carbonat- oder Epichlorfunktionen.

Als Verbindung der Vernetzerklasse II seien als Beispiele genannt Polyole, beispielsweise Ethylenglykol, Polethylenglykole wie Diethylenglykol, Triethylenglykol und Tetraethylenglykol, Propylenglykol, Polypropylenglykole wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylen-Oxypropylen-Blockcopolymere, Sorbitanfettsäureester, Polyoxyethylensorbitanfettsäureester, Pentaerythrit, Polyvinylalkohol und Sorbitol, Aminoalkohole, beispielsweise Ethanolamin, Diethanolamin, Triethanolamin oder Propanolamin, Polyaminverbindungen, beispielsweise Ethylendiamin, Diethylentriaamin, Triethylentetraamin, Tetraethylenpentaamin oder Pentaethylenhexaamin, Polyglycidylether-Verbindungen wie Ethylenglykoliglycidylether, Polyethylenglykoldiglycidylether, Glycerindiglycidylether, Glycerinpolyglycidyether, Pentareritritpolyglycidylether, Propylenglykoldiglycidylether Polypropylenglykoldiglycidylether, Neopentylglykoldiglycidylether, Hexandiolglycidylether, Trimethylolpropanpolyglycidylether, Sorbitolpolyglycidylether, Phtahlsäurediglycidylester, Adipinsäurediglycidylether, 1,4-Phenylen-bis(2-oxazolin), Glycidol, Polyisocyanate, vorzugsweise Diisocyanate wie 2,4-Toluoldiisocyanat und Hexamethylendiisocyanat, Polyaziridin-Verbindungen wie 2,2-Bishydroxymethylbutanol-tris[3-(1-aziridinyl)propionat], 1,6-Hexamethylendiethylenharnstoff und Diphenylmethan-bis-4,4'-N,N'-diethylenharnstoff, Halogenperoxide beispielsweise Epichlor- und Epibromhydrin und $\alpha$-Methylepichlorhydrin, Alkylencarbonate wie 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on, polyquartäre Amine wie Kondensationsprodukte von Dimethylaminen und Epichlorhydrin. Als Verbindungen der Vernetzerklasse II sind des Weiteren Polyoxazoline wie 1,2-Ethylenbisoxazolin, Vernetzer mit Silangruppen wie $\gamma$-Glycidoxypropyltrimethoxysilan und $\gamma$-Aminopropyltrimethoxysilan, Oxazolidinone wie 2-Oxazolidinon, Bis- und Poly-2-oxazolidinone und Diglykolsilikate bevorzugt.

Als Verbindungen der Klasse III sind hydroxyl- oder aminogruppenhaltige Ester der (Meth)acrylsäure, wie

beispielsweise 2-Hydroxyethyl(meth)acrylat und 2-Hydroxypropyl-(meth)acrylat sowie hydroxyl- oder aminogruppenhaltige (Meth)acrylamide oder Mono(meth)allylverbindungen von Diolen bevorzugt.

Die polyvalenten Metallkationen der Vernetzerklasse IV leiten sich vorzugsweise von ein- oder mehrwertigen Kationen ab, die einwertigen insbesondere von Alkalimetallen, wie Kalium, Natrium, Lithium, wobei Lithium bevorzugt wird. Bevorzugte zweiwertige Kationen leiten sich von Zink, Beryllium, Erdalkalimetallen, wie Magnesium, Calcium, Strontium ab, wobei Magnesium bevorzugt wird. Weiter erfindungsgemäß einsetzbare höherwertige Kationen sind Kationen von Aluminium, Eisen, Chrom, Mangan, Titan, Zirkonium und andere Übergangsmetalle sowie Doppelsalze solcher Kationen oder Mischungen der genannten Salze. Bevorzugt werden Aluminiumsalze und Alaune und deren unterschiedliche Hydrate wie z. B. $AlCl_3 \times 6H_2O$, $NaAl(SO_4)_2 \times 12\ H_2O$, $KAl(SO_4)_2 \times 12\ H_2O$ oder $Al_2(SO_4)_3 \times 14\text{-}18\ H_2O$ eingesetzt. Besonders bevorzugt werden $Al_2(SO_4)_3$ und seine Hydrate als Vernetzer der Vernetzungsklasse IV verwendet.

Die im erfindungsgemäßen Verfahren eingesetzten Superabsorberteilchen sind vorzugsweise durch Vernetzer der folgenden Vernetzerklassen bzw. durch Vernetzer der folgenden Kombinationen von Vernetzerklassen vernetzt: I, II, III, IV, I II, I III, I IV, I II III, I II IV, I III IV, II III IV, II IV oder III IV. Die vorstehenden Kombinationen von Vernetzerklassen stellen jeweils eine bevorzugte Ausführungsform von Vernetzern eines im erfindungsgemäßen Verfahren eingesetzten Superabsorberteilchens dar.

Weitere bevorzugte Ausführungsformen der im erfindungsgemäßen Verfahren eingesetzten Superabsorberteilchen sind Polymere, die durch einen beliebigen der vorstehend genannten Vernetzer der Vernetzerklasse I vernetzt sind. Unter diesen sind wasserlösliche Vernetzer bevorzugt. In diesem Zusammenhang sind N,N'-Methylenbisacrylamid, Polyethylenglykoldi(meth)acrylate, Triallylmethylammoniumchlorid, Tetraallylammoniumchlorid sowie mit 9 Mol Ethylenoxid pro Mol Acrylsäure hergestelltes Allylnonaethylenglykolacrylat besonders bevorzugt.

Als wasserlösliche Polymere ($\alpha$4) können in den Superabsorberteilchen wasserlösliche Polymerisate, wie teil- oder vollverseifter Polyvinylalkohol, Polyvinylpyrrolidon, Stärke oder Stärkederivate, Polyglykole oder Polyacrylsäure enthalten, vorzugsweise einpolymerisiert sein. Das Molekulargewicht dieser Polymere ist unkritisch, solange sie wasserlöslich sind. Bevorzugte wasserlösliche Polymere sind Stärke oder Stärkederivate oder Polyvinylalkohol. Die wasserlöslichen Polymere, vorzugsweise synthetische wie Polyvinylalkohol, können auch als Pfropfgrundlage für die zu polymerisierenden Monomeren dienen.

Als Hilfsstoffe ($\alpha$5) sind in den Polymeren, organische oder anorganische Partikel wie beispielsweise Geruchsbinder, insbesondere Zeolithe oder Cyclodextrine, Hautpflegesubstanzen, oberflächenaktive Mittel oder Antioxidantien enthalten.

Zu den bevorzugten organischen Hilfsstoffen gehören Cyclodextrine oder deren Derivate sowie Polysaccharide. Außerdem sind Cellulose und Cellulosederivate wie CMC, Celluloseether bevorzugt. Als Cyclodextrine oder Cyclodextrinderivate sind dabei diejenigen Verbindungen bevorzugt, die in DE-A-198 25 486 auf der Seite 3, Zeile 51 bis Seite 4, Zeile 61 offenbart sind. Der vorstehend genannte Abschnitt dieser veröffentlichten Patentanmeldung wird hiermit als Referenz eingeführt und gilt als Teil der Offenbarung der vorliegenden Erfindung. Besonders bevorzugte Cyclodextrine sind nicht derivatisierte $\alpha$-, ß-, $\gamma$ - oder $\delta$-Cyclodextrine.

Als anorganische partikuläre Hilfsstoffe können alle Materialen eingesetzt werden, welche üblicherweise zur Modifizierung der Eigenschaften wasserabsorbierender Polymere eingesetzt werden. Zu den bevorzugten anorganischen Hilfsstoffen gehören Sulfate wie $Na_2SO_4$, Lactate wie etwa Natriumlactat, Silikate, insbesondere Gerüstsilikate wie Zeolithe oder Silikate, die durch Trocknung wässriger Kieselsäurelösungen oder Kieselsolen erhalten wurden, beispielsweise die kommerziell erhältlichen Produkte wie Fällungskieselsäuren und pyrogene Kieselsäuren, beispielsweise Aerosile mit einer Teilchengröße im Bereich von 5 bis 50 nm, vorzugsweise im Bereich von 8 bis 20 nm wie "Aerosil 200" der Evonik Industries AG, Aluminate, Titandioxide, Zinkoxide, Tonmaterialien und weitere dem Fachmann geläufige Mineralien sowie kohlenstoffhaltige anorganische Materialien.

Bevorzugte Silikate sind alle natürlichen oder synthetischen Silikate, die in Hollemann und Wiberg, Lehrbuch der Anorganischen Chemie, Walter de Gruyter-Verlag, 91.-100. Auflage, 1985 auf den Seiten 750 bis 783, als Silikate offenbart sind. Der vorstehend genannte Abschnitt dieses Lehrbuchs wird hiermit als Referenz eingeführt und gilt als Teil der Offenbarung der vorliegenden Erfindung.

Besonders bevorzugte Silikate sind die Zeolithe. Als Zeolithe können alle dem Fachmann bekannten synthetischen oder natürlichen Zeolithe eingesetzt werden. Bevorzugte natürliche Zeolithe sind Zeolithe aus der Natrolith-Gruppe, der Harmoton-Gruppe, der Mordenit-Gruppe, der Chabasit-Gruppe, der Faujasit-Gruppe (Sodalith-Gruppe) oder der Analcit-Gruppe. Beispiele für natürliche Zeolithe sind Analcim, Leucit, Pollucite, Wairakite, Bellbergite, Bikitaite, Boggsite, Brewsterite, Chabasit, Willhendersonite, Cowlesite, Dachiardite, Edingtonit, Epistilbit, Erionit, Faujasit, Ferrierite, Amicite, Garronite, Gismondine, Gobbinsite, Gmelinit, Gonnardite, Goosecreekit, Harmotom, Phillipsit, Wellsite, Clinoptilolit, Heulandit, Laumontit, Levyne, Mazzite, Merlinoite, Montesommaite, Mordenit, Mesolit, Natrolit, Scolecit, Offretite, Paranatrolite, Paulingite, Perlialite, Barrerite, Stilbit, Stellerit, Thomsonit, Tschernichite oder Yugawaralite. Bevorzugte synthetische Zeolithe sind Zeolith A, Zeolith X, Zeolith Y, Zeolith P oder das Produkt ABSCENTS®.

Als Zeolithe können Zeolithe des so genannten "mittleren" Typs eingesetzt werden, bei denen das $SiO_2$/A-

$lO_2$-Verhältnis kleiner als 10 ist, besonders bevorzugt liegt das $SiO_2/AlO_2$-Verhältnis dieser Zeolithe in einem Bereich von 2 bis 10. Neben diesen "mittleren" Zeolithen können weiterhin Zeolithe des "hohen" Typs eingesetzt werden, zu denen beispielsweise die bekannten "Molekularsieb"-Zeolithe des Typs ZSM sowie ß-Zeolith gehören. Diese "hohen" Zeolithe sind vorzugsweise durch ein $SiO_2/AlO_2$-Verhältnis von mindestens 35, besonders bevorzugt von einem $SiO_2/AlO_2$-Verhältnis in einem Bereich von 200 bis 500 gekennzeichnet.

Als Aluminate werden vorzugsweise die in der Natur vorkommenden Spinelle, insbesondere gewöhnlicher Spinell, Zinkspinell, Eisenspinell oder Chromspinell eingesetzt.

Bevorzugtes Titandioxid ist das reine Titandioxid in den Kristallformen Rutil, Anatas und Brookit, sowie eisenhaltige Titandioxide wie beispielsweise Ilmenit, calciumhaltige Titandioxide wie Titanit oder Perowskit.

Bevorzugte Tonmaterialien sind diejenigen, die in Hollemann und Wiberg, Lehrbuch der Anorganischen Chemie, Walter de Gruyter-Verlag, 91.-100. Auflage, 1985 auf den Seiten 783 bis 785, als Tonmaterialien offenbart sind. Besonders Der vorstehend genannte Abschnitt dieses Lehrbuchs wird hiermit als Referenz eingeführt und gilt als Teil der Offenbarung der vorliegenden Erfindung. Besonders bevorzugte Tonmaterialien sind Kaolinit, Illit, Halloysit, Montmorillonit sowie Talk.

Weiterhin sind als anorganische Feinteilchen die Metallsalze der Mono-, Oligo- und Polyphosphorsäuren erfindungsgemäß bevorzugt. Hierunter sind insbesondere die Hydrate bevorzugt, wobei die Mono- bis Deca-Hydrate und Tri-Hydrate besonders bevorzugt sind. Als Metalle kommen insbesondere Alkali- und Erdalkalimetalle in Betracht, wobei die Erdalkalimetalle bevorzugt sind. Hierunter sind Mg und Ca bevorzugt und Mg besonders bevorzugt. Im Zusammenhang mit Phosphaten, Phosphorsäuren und deren Metallverbindungen wird auf Hollemann und Wiberg, Lehrbuch der Anorganischen Chemie, Walter de Gruyter-Verlag, 91.-100. Auflage, 1985, auf den Seiten 651 bis 669 verwiesen. Der vorstehend genannte Abschnitt dieses Lehrbuchs wird hiermit als Referenz eingeführt und gilt als Teil der Offenbarung der vorliegenden Erfindung.

Bevorzugte kohlenstoffhaltige, jedoch nicht organische Hilfsstoffe sind diejenigen reinen Kohlenstoffe, die in Hollemann und Wiberg, Lehrbuch der Anorganischen Chemie, Walter de Gruyter-Verlag, 91.-100. Auflage, 1985 auf den Seiten 705 bis 708 als Graphite genannt sind. Der vorstehend genannte Abschnitt dieses Lehrbuchs wird hiermit als Referenz eingeführt und gilt als Teil der Offenbarung der vorliegenden Erfindung. Besonders bevorzugte Graphite sind künstliche Graphite wie beispielsweise Koks, Pyrographit, Aktivkohle oder Ruß.

Die im erfindungsgemäßen Verfahren erhaltenen wasserabsorbierende Polymere sind vorzugsweise dadurch erhältlich, dass zunächst aus den vorgenannten Monomeren und Vernetzern ein Hydrogel-Polymer (VP) in partikulärer Form hergestellt wird. Die Herstellung dieses Ausgangsmaterials für die wasserabsorbierenden Polymere erfolgt beispielsweise durch Massepolymerisation, die vorzugsweise in Knetreaktoren wie Extrudern erfolgt, Lösungspolymerisation, Spraypolymerisation, inverse Emulsionspolymerisation oder inverse Suspensionspolymerisation. Bevorzugt wird die Lösungspolymerisation in Wasser als Lösemittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818. Die Offenbarungen werden hiermit als Referenz eingeführt und gelten somit als Teil der Offenbarung.

Als Initiatoren zur Initiierung der Polymerisation können alle unter den Polymerisationsbedingungen Radikale bildende Initiatoren verwendet werden, die üblicherweise bei der Herstellung von Superabsorbern eingesetzt werden. Hierzu gehören thermische Initiatoren, Redoxinitiatoren und Photoinitiatoren, deren Aktivierung durch energiereiche Strahlung erfolgt. Die Polymerisationsinitiatoren können dabei in einer Lösung erfindungsgemäßer Monomere gelöst oder dispergiert enthalten sein. Bevorzugt ist der Einsatz wasserlöslicher Initiatoren.

Als thermische Initiatoren kommen sämtliche dem Fachmann bekannte, unter Temperatureinwirkung in Radikale zerfallende Verbindungen in Betracht. Besonders bevorzugt sind dabei thermische Polymerisationsinitiatoren mit einer Halbwertszeit von weniger als 10 Sekunden, darüber hinaus bevorzugt von weniger als 5 Sekunden bei weniger als 180 °C, darüber hinaus bevorzugt bei weniger als 140°C. Dabei sind Peroxide, Hydroperoxide, Wasserstoffperoxid, Persulfate sowie Azoverbindungen besonders bevorzugte thermische Polymerisationsinitiatoren. In manchen Fällen ist es vorteilhaft, Mischungen verschiedener thermischer Polymerisationsinitiatoren zu verwenden. Unter diesen Mischungen sind die aus Wasserstoffperoxid und Natrium- oder Kaliumperoxodisulfat bevorzugt, die in jedem denkbaren Mengenverhältnis eingesetzt werden können. Geeignete organische Peroxide sind vorzugsweise Acetylacetonperoxid, Methylethylketonperoxid, Benzoylperoxid, Lauroylperoxid, Acetylperoxid, Capyrlperoxid, Isopropylperoxydicarbonat, 2-Ethylhexylperoxydicarbonat, t-Butylhydroperoxid, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, t-Butylperbenzoat, t-Butyl-3,5,5-tri-methylhexanoat und Amylperneodekanoat. Weiterhin sind als thermische Polymerisationsinitiatoren bevorzugt: Azo-Verbindungen, wie Azobisisobutyronitrol, Azobisdimethylvaleronitril, 2,2'-Azobis-(2-amidinopropan)dihydrochlorid, Azo-bis-amidinopropan-dihydrochlord, 2,2'-Azobis-(N,N-dimethylen)isobutyramidin-dihydrochlorid, 2-(Carbamoylazo)- isobutyronitril und 4,4'-Azobis-(4-cyanovaleriansäure). Die genannten Verbindungen werden in üblichen Mengen eingesetzt, vorzugsweise in einem Bereich von 0,01 bis 5, bevorzugt von 0,1 bis 2 Mol-%, jeweils bezogen auf die Menge der zu polymerisierenden Monomere.

Die Redoxinitiatoren enthalten als oxidische Komponente mindestens eine der oben angegebenen Perverbindungen und als reduzierende Komponente vorzugsweise Ascorbinsäure, Glukose, Sorbose, Manose, Ammonium- oder Alkalimetall-hydrogensulfit, - sulfat, -thiosulfat, -hyposulfit oder -sulfid, Metallsalze, wie Eisen-II-ionen oder Silberionen oder Natriumhydroxymethylsulfoxylat. Vorzugsweise wird als reduzierende Komponente des Redoxinitiators Ascorbinsäure oder Natriumpyrosulfit verwendet. Bezogen auf die bei der Polymerisation eingesetzte Menge an Monomeren wird $1\times10^{-5}$ bis 1 Mol-% der reduzierenden Komponente des Redoxinitiators und $1\times10^{-5}$ bis 5 Mol-% der oxidierenden Komponente des Redoxinitiators eingesetzt. Anstelle der oxidierenden Komponente des Redoxinitiators, oder in Ergänzung zu diesem, können ein oder mehrere, vorzugsweise wasserlösliche, Azoverbindungen verwendet werden.

Wenn man die Polymerisation durch Einwirkung energiereicher Strahlung auslöst, verwendet man üblicherweise als Initiator sogenannte Photoinitiatoren. Hierbei kann es sich beispielsweise um sogenannte $\alpha$-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethylamino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)malein- imid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclo-hexanon und 2,6-Bis-(p-azidobenzyliden)-4-methylcyclohexanon. Die Photoinitiatoren werden, falls sie eingesetzt werden, üblicherweise in Mengen von 0,01 bis 5 Gew.-%, bezogen auf die zu polymerisierenden Monomeren angewendet.

Bevorzugt wird erfindungsgemäß ein Initiatorsystem bestehend aus Wasserstoffperoxid, Natriumperoxodisulfat und Ascorbinsäure eingesetzt. In der Regel wird die Polymerisation mit den Initiatoren in einem Temperaturbereich von 0°C bis 90°C initiiert.

Die Polymerisationsreaktion kann durch einen Initiator oder durch mehrere, zusammenwirkende Initiatoren ausgelöst werden. Weiterhin kann die Polymerisation derart durchgeführt werden, dass man zunächst ein oder mehrere Redoxinitiatoren zusetzt. Im weiteren Polymerisationsverlauf werden dann zusätzlich thermische Initiatoren oder Photoinitiatoren appliziert, wobei im Falle von Photoninitiatoren die Polymerisationsreaktion dann durch die Einwirkung energiereicher Strahlung initiiert wird. Auch die umgekehrte Reihenfolge, also die anfängliche Initiierung der Reaktion mittels energiereicher Strahlung und Photoinitiatoren oder thermischen Initiatoren und eine im weiteren Polymerisationsverlauf erfolgende Initiierung der Polymerisation mittels eines oder mehrerer Redoxinitiatoren ist denkbar.

Um die so erhaltenen Hydrogel-Polymere (VP) in eine partikuläre Form zu überführen, können diese nach ihrer Abtrennung aus der Reaktionsmischung zunächst bei einer Temperatur in einem Bereich von 20 bis 300°C, bevorzugt in einem Bereich von 50 bis 250°C und besonders bevorzugt in einem Bereich von 100 bis 200°C bis hin zu einem Wassergehalt von weniger als 40 Gew.-%, bevorzugt von weniger als 20 Gew.-% und darüber hinaus bevorzugt von weniger als 10 Gew.-%, jeweils bezogen auf das Gesamtgewicht des Hydrogel-Polymers (VP), getrocknet werden. Die Trocknung erfolgt vorzugsweise in dem Fachmann bekannten Öfen oder Trocknern, beispielsweise in Bandtrocknern, Hordentrocknern, Drehrohröfen, Wirbelbetttrocknern, Tellertrocknern, Paddeltrocknern oder Infrarottrocknern.

Gemäß der vorliegenden Erfindung erfolgt das Zerkleinern dabei vorzugsweise durch Trockenmahlen, vorzugsweise durch Trockenmahlen in einer Hammermühle, einer Stiftmühle, einer Kugelmühle oder einer Walzenmühle. In einer weiteren Ausführung der vorliegenden Erfindung kann die Zerkleinerung des Hydrogel-Polymeren auch durch die Kombinationen von mehreren der vorbeschriebenen Mühlen erfolgen.

In einer bevorzugten Ausführungsform des erfindungsgemäßen Verfahrens werden als wasserabsorbierende Polymere, Partikel erhalten, die einen Innenbereich und einen den Innenbereich begrenzenden Oberflächenbereich aufweisen. Wobei der Oberflächenbereich eine andere chemische Zusammensetzung als der Innenbereich aufweist oder sich in einer physikalischen Eigenschaft vom Innenbereich unterscheidet. Physikalische Eigenschaften, in denen sich der Innenbereich vom Oberflächenbereich unterscheidet, sind beispielsweise die Ladungsdichte oder der Vernetzungsgrad.

Diese einen Innenbereich und einen den Innenbereich begrenzenden Oberflächenbereich aufweisenden wasserabsorbierenden Polymere sind dadurch erhältlich, dass oberflächennahe, reaktive Gruppen der Partikel des partikulären Hydrogel-Polymers (VP) nachvernetzt werden. Diese Nachvernetzung kann thermisch, photochemisch oder chemisch erfolgen.

Als Nachvernetzer bevorzugt sind die im Zusammenhang mit den Vernetzern ($\alpha$3) genannten Verbindungen der Vernetzerklasse II und IV. Unter diesen Verbindungen sind als Nachvernetzer besonders bevorzugt Diethylenglykol, Triethylenglykol, Polyethylenglykol, Glyzerin, Polyglyzerin, Propylenglykol, Diethanolamin, Triethanolamin, Polyoxypropylen, Oxyethylen-Oxypropylen-Blockcopolymere, Sorbitanfettsäureester, Polyoxyethylensorbitanfettsäureester, Trimethylolpropan, Pentaerytrit, Polyvinylalkohol, Sorbitol, 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on.

Besonders bevorzugt wird Ethylencarbonat als Nachvernetzer eingesetzt.

Bevorzugte Ausführungsformen der wasserabsorbierenden Polymere sind diejenigen, die durch Vernetzer der folgenden Vernetzerklassen bzw. durch Vernetzer der folgenden Kombinationen von Vernetzerklassen nachvernetzt sind: II, IV und II IV.

Vorzugsweise wird der Nachvernetzer in einer Menge in einem Bereich von 0,01 bis 30 Gew.-%, besonders bevorzugt in einer Menge in einem Bereich von 0,1 bis 20 Gew.-% und darüber hinaus bevorzugt in einer Menge in einem Bereich von 0,3 bis 5 Gew.-%, jeweils bezogen auf das Gewicht der superabsorbierenden Polymere bei der Nachvernetzung eingesetzt.

Es ist ebenfalls bevorzugt, dass die Nachvernetzung dadurch erfolgt, dass ein Lösemittel, umfassend vorzugsweise Wasser, mit Wasser mischbare organische Lösemittel wie etwa Methanol oder Ethanol oder Mischungen aus mindestens zwei davon, sowie den Nachvernetzer mit dem Aussenbereich der Hydrogel-Polymerteilchen bei einer Temperatur in einem Bereich von 30 bis 300°C, besonders bevorzugt in einem Bereich von 100 bis 200°C in Kontakt gebracht werden. Das in Kontakt bringen erfolgt dabei vorzugsweise durch Aufsprühen, der Mischung bestehend aus Nachvernetzer und Lösemittel, auf die Hydrogel-Polymerteilchen und anschließendes Mischen der mit der Mischung in Kontakt gebrachten Hydrogel-Polymerteilchen. Dabei ist der Nachvernetzer in der Mischung vorzugsweise in einer Menge in einem Bereich von 0,01 bis 20 Gew.-%, besonders bevorzugt in einer Menge in einem Bereich von 0,1 bis 10 Gew.-%, bezogen auf das Gesamtgewicht der Mischung, enthalten. Es ist weiterhin bevorzugt, dass in einer Menge in einem Bereich von 0,01 bis 50 Gew.-%, besonders bevorzugt in einer Menge in einem Bereich von 0,1 bis 30 Gew.-%, jeweils bezogen auf das Gewicht der Hydrogel-Polymerteilchen, mit den Hydrogel-Polymerteilchen in Kontakt gebracht wird.

Als Kondensationsreaktionen kommen vorzugsweise die Bildung von Ester-, Amid-, Imid- oder Urethanbindungen in Betracht, wobei die Bildung von Esterbindung bevorzugt ist. Darüber hinaus können dem erfindungsgemäßen Hydrogel-Polymeren und/oder wasserabsorbierenden Polymeren weitere Additive und Effektstoffe zugesetzt werden.

Als Additive sind des weiteren Trennmittel bevorzugt, wie etwa anorganische oder organische pulverförmige Trennmittel. Diese Trennmittel werden vorzugsweise in Mengen in einem Bereich von 0 bis 2 Gew.-%, besonders bevorzugt in einem Bereich von 0,1 bis 1,5 Gew.-%, bezogen auf das Gewicht des Hydrogel-Polymers und/oder des wasserabsorbierenden Polymers, eingesetzt. Bevorzugte Trennmittel sind Holzmehl, Pulp Fasern, pulverförmige Rinde, Cellulosepulver, mineralische Füllstoffe wie Perlit, synthetische Füllstoffe wie Nylonpulver, Rayonpulver, Diatomerde, Bentonit, Kaolin, Zeolithe, Talk, Lehm, Asche, Kohlenstaub, Magnesiumsilikate, Dünger oder Mischungen der Substanzen. Hochdisperse pyrogene Kieselsäure wie sie unter dem Handelsnamen Aerosil von Evonik Degussa vertrieben wird ist bevorzugt.

In einer weiteren bevorzugten Ausführungsform des erfindungsgemäßen Verfahrens erfolgt das in Kontakt bringen der Hydrogel-Polymerteilchen und oder der wasserabsorbierenden Polymerteilchen mit einen Effektstoff, wie z.B. einem Polyzucker, einer polyphenolischen Verbindung wie z.B. hydrolisierbare Tannine oder einer Silizium-Sauerstoff beinhaltenden Verbindung oder einer Mischung von mindestens zwei darauf basierenden Effektstoffen. Der Effektstoff kann sowohl in fester Form (Pulver) als auch in gelöster form mit einem Lösemittel zugegeben werden, wobei die Zugabe des Effektstoffs frühestens nach dem Verfahrensschritt iii) erfolgt. Als Effektstoff wird im Rahmen der vorliegenden Erfindung ein Stoff verstanden, der zur Geruchsinhibierung dient.

Erfindungsgemäß werden hierunter Polyzucker verstanden unter denen der Fachmann solche aus der Gruppe von den geläufigen Stärken und deren Derivate, Cellulosen und deren Derivate, Cyclodextrine versteht. Wobei als Cyclodextrine vorzugsweise $\alpha$-Cyclodextrin, $\beta$-Cyclodextrin, y-Cyclodextrin oder Mischungen aus diesen Cyclodextrinen verstanden werden.

Als Silizium-Sauerstoff beinhaltende Verbindungen sind Zeolithe bevorzugt. Als Zeolithe können alle dem Fachmann bekannten synthetischen oder natürlichen Zeolithe eingesetzt werden. Bevorzugte natürliche Zeolithe sind Zeolithe aus der Natrolith-Gruppe Harmoton-Gruppe, der Mordenit-Gruppe, der Chabasit-Gruppe, der Faujasit-Gruppe (Sodalith-Gruppe) oder der Analcit-Gruppe. Beispiele für natürliche Zeolithe sind Analcim, Leucit, Pollucite, Wairakite, Bellbergite, Bikitaite, Boggsite, Brewsterite, Chabazit, Willhendersonite, Cowlesite, Dachiardite, Edingtonit, Epistilbit, Erionit, Faujasit, Ferrierite, Amicite, Garronite, Gismondine, Gobbinsite, Gmelinit, Gonnardite, Goosecreekit, Harmotom, Phillipsit, Wellsite, Clinoptilolit, Heulandit, Laumontit, Levyne, Mazzite, Merlinoite, Montesommaite, Mordenit, Mesolit, Natrolit, Scolecit, Offretite, Paranatrolite, Paulingite, Perlialite, Barrerite, Stilbit, Stellerit, Thomsonit, Tschernichite oder Yugawaralite. Bevorzugte synthetische Zeolithe sind Zeolith A, Zeolith X, Zeolith Y, Zeolith P oder das Produkt ABSCENTS®.

Als Kationen enthalten die in dem erfindungsgemäßen Verfahren eingesetzten Zeolithe vorzugsweise Alkalimetall-Kationen wie $Li^+$, $Na^+$, $K^+$, $Rb^+$, $Cs^+$ oder $Fr^+$ und/oder Erdalkalimetall-Kationen wie $Mg^{2+}$, $Ca^{2+}$, $Sr^{2+}$ oder $Ba^{2+}$.

Als Zeolithe können Zeolithe des sogenannten "mittleren" Typs eingesetzt werden, bei denen das $SiO_2$/A-

$IO_2$-Verhältnis kleiner als 10 ist, besonders bevorzugt liegt das $SiO_2/AlO_2$-Verhältnis dieser Zeolithe in einem Bereich von 2 bis 10. Neben diesen "mittleren" Zeolithen können weiterhin Zeolithe des "hohen" Typs eingesetzt werden, zu denen beispielsweise die bekannten "Molekularsieb"-Zeolithe des Typs ZSM sowie beta-Zeolith gehören. Diese "hohen" Zeolithe sind vorzugsweise durch ein $SiO_2/AlO_2$-Verhältnis von mindestens 35, besonders bevorzugt von einem $SiO_2/AlO_2$-Verhältnis in einem Bereich von 200 bis 500 gekennzeichnet.

Vorzugsweise werden die Zeolithe als Partikel mit einer mittleren Partikelgröße in einem Bereich von 1 bis 500 μm, besonders bevorzugt in einem Bereich von 2 bis 200 μm und darüber hinaus bevorzugt in einem Bereich von 5 bis 100 μm eingesetzt.

Die Effektstoffe werden in den erfindungsgemäßen Verfahren vorzugsweise in einer Menge in einem Bereich von 0,1 bis 50 Gew.-%, besonders bevorzugt in einem Bereich von 1 bis 40 Gew.-% und darüber hinaus bevorzugt in einer Menge in einem Bereich von 5 bis 30 Gew.-%, jeweils bezogen auf das Gewicht der Hydrogel-Polymerteilchen und oder wasserabsorbierenden Polymerteilchen, eingesetzt.

Als keimhemmende Mittel sind grundsätzlich alle gegen grampositive Bakterien wirksamen Stoffe bevorzugt, wie z. B. 4-Hydroxybenzoesäure und ihre Salze und Ester, N-(4-Chlorphenyl)-N'-(3,4dichlorphenyl)harnstoff, 2,4,4'-Trichlor-2'-hydroxydiphenylether (Triclosan), 4-Chlor-3,5-dimethylphenol, 2,2'- Methylen-bis(6-brom-4-chlorphenol), 3-Methyl-4-(1-methylethyl)phenol, 2-Benzyl-4-chlorphenol, 3-(4- Chlorphenoxy)-1,2-propandiol, 3-lod-2-propinylbutylcarbamat, Chlorhexidin, 3,4,4'-Trichlorcarbonilid (TTC), antibakterielle Riechstoffe, Thymol, Thymianöl, Eugenol, Nelkenöl, Menthol, Minzöl, Famesol, Phenoxyethanol, Glycerinmonocaprinat, Glycerinmonocaprylat, Glycerinmonolaurat (GML), Diglycerinmonocaprinat (DMC), Salicylsäure-N-alkylamide wie z. B. Salicylsäure-n-octylamid oder Salicylsäure-n-decylamid.

Als Enzyminhibitoren sind beispielsweise Esteraseinhibitoren geeignet. Hierbei handelt es sich vorzugsweise um Trialkylcitrate wie Trimethylcitrat, Tripropylcitrat, Triisopropylcitrat, Tributylcitrat und insbesondere Triethylcitrat (Hydagen TM CAT, Cognis GmbH, Düsseldorf/Deutschland). Die Stoffe inhibieren die Enzymaktivität und reduzieren dadurch die Geruchsbildung. Weitere Stoffe, die als Esteraseinhibitoren in Betracht kommen, sind Sterolsulfate oder -phosphate, wie beispielsweise Lanosterin-, Cholesterin-, Campesterin-, Stigmasterin- und Sitosterinsulfat bzw -phosphat, Dicarbonsäuren und deren Ester, wie beispielsweise Glutarsäure, Glutarsäuremonoethylester, Glutarsäurediethylester, Adipinsäure, Adipinsäuremonoethylester, Adipinsäurediethylester, Malonsäure und Malonsäurediethylester, Hydroxycarbnonsäuren und deren Ester wie beispielsweise Citronensäure, Äpfelsäure, Weinsäure oder Weinsäurediethylester, sowie Zinkglycinat.

Als Geruchsabsorber eignen sich Stoffe, die geruchsbildende Verbindungen aufnehmen und weitgehend festhalten können. Sie senken den Partialdruck der einzelnen Komponenten und verringern so auch ihre Ausbreitungsgeschwindigkeit. Wichtig ist, dass dabei Parfums unbeeinträchtigt bleiben müssen. Geruchsabsorber haben keine Wirksamkeit gegen Bakterien. Sie enthalten beispielsweise als Hauptbestandteil ein komplexes Zinksalz der Ricinolsäure oder spezielle, weitgehend geruchsneutrale Duftstoffe, die dem Fachmann als "Fixateure" bekannt sind, wie z. B. Extrakte von Labdanum bzw. Styrax oder bestimmte Abietinsäurederivate. Als Geruchsüberdecker fungieren Riechstoffe oder Parfümöle, die zusätzlich zu ihrer Funktion als Geruchsüberdecker den Deodorantien ihre jeweilige Duftnote verleihen. Als Parfümöle seien beispielsweise genannt Gemische aus natürlichen und synthetischen Riechstoffen. Natürliche Riechstoffe sind Extrakte von Blüten, Stengeln und Blättern, Früchten, Fruchtschalen, Wurzeln, Hölzern, Kräutern und Gräsern, Nadeln und Zweigen sowie Harzen und Balsamen. Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z. B. Benzylacetat, p-tert.-Butylcyclohexylacetat, Linalylacetat, Phenylethylacetat, Linalylbenzoat, Benzylformiat, Allylcyclohexylpropionat, Styrallylpropionat und Benzylsalicylat. Zu den Ethern zählen beispielsweise Benzylethylether, zu den Aldehyden z. B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z. B. die Jonone und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z. B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labdanumöl und Lavandinöl. Vorzugsweise werden Bergamotteöl, Dihydromyrcenol, Lilial, Lyral, Citronellol, Phenylethylalkohol, alpha -Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, beta-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilat, Irotyl und Floramat allein oder in Mischungen, eingesetzt.

Antitranspirantien reduzieren durch Beeinflussung der Aktivität der ekkrinen Schweißdrüsen die Schweißbildung, und wirken somit Achselnässe und Körpergeruch entgegen. Als adstringierende Antitranspirant-Wirkstoffe

eignen sich vor allem Salze des Aluminiums, Zirkoniums oder des Zinks. Solche geeigneten antihydrotisch wirksamen Wirkstoffe sind z. B. Aluminiumchlorid, Aluminiumchlorhydrat, Aluminiumdichlorhydrat, Aluminiumsesquichlorhydrat und deren Komplexverbindungen z. B. mit Propylenglycol-1,2. Aluminiumhydroxyallantoinat, Aluminiumchloridtartrat, Aluminium-Zirkonium-Trichlorohydrat, Aluminium-Zirkonium-Tetrachlorohydrat, Aluminium-Zirkonium-Pentachlorohydrat und deren Komplexverbindungen z. B. mit Aminosäuren wie Glycin.

Zum Mischen bzw. Besprühen sind alle Vorrichtungen geeignet, die eine homogene Verteilung einer Lösung, Pulver, Suspension oder Dispersion auf oder mit den Hydrogel-Polymerteilchen (VP) oder wasserabsorbierenden Polymeren erlauben. Beispiele sind Lödige Mischer (hergestellt durch die Firma *Gebrüder Lödige Maschinenbau GmbH),* Gericke Multi-Flux Mischer (hergestellt durch die Firma *Gericke GmbH),* DRAIS-Mischer (hergestellt durch die Firma *DRAIS GmbH* Spezialmaschinenfabrik Mannheim), Hosokawa Mischer *(Hosokawa Mokron* Co., *Ltd.),* Ruberg Mischer (hergestellt durch die Firma *Gebr. Ruberg GmbH* & *C0.KG Nieheim),* Hüttlin Coater (hergestellt durch die Firma *BWI Hüttlin GmbH Steinen),* Fließbetttrockner oder Sprühgranulatoren von AMMAG (hergestellt durch die Firma *AMMAG Gunskirchen, Österreich)* oder Heinen (hergestellt durch die Firma A. *Heinen AG Anlagenbau Varel),* Patterson-Kelly-Mischer, NARA-Schaufelmischer, Schneckenmischer, Tellermischer, Wirbelschichttrockner oder Schugi-Mischer. Für das in Kontakt bringen in einer Wirbelschicht können alle dem Fachmann bekannten und geeignet erscheinenden Wirbelschichtverfahren angewandt werden. Beispielsweise kann ein Wirbelschichtcoater eingesetzt werden.

Offenbart wird auch ein Verbund, beinhaltend die durch das erfindungsgemäße Verfahren erhältliche wasserabsorbierenden Polymere und ein Substrat. Es ist dabei bevorzugt, dass die wasserabsorbierenden Polymere und das Substrat miteinander fest verbunden sind. Als Substrate sind Folien aus Polymeren, wie beispielsweise aus Polyethylen, Polypropylen oder Polyamid, Metalle, Vliese, Fluff, Tissues, Gewebe, natürliche oder synthetische Fasern, oder Schäume bevorzugt. Weiterhin ist es bevorzugt, dass der Verbund mindestens einen Bereich umfasst, welcher wasserabsorbierenden Polymere in einer Menge im Bereich von etwa 15 bis 100 Gew.-%, vorzugsweise etwa 30 bis 100 Gew.-%, besonders bevorzugt von etwa 50 bis 99,99 Gew.-%, ferner bevorzugt von etwa 60 bis 99,99 Gew.-% und darüber hinaus bevorzugt von etwa 70 bis 99 Gew.-%, jeweils bezogen auf das Gesamtgewicht des betreffenden Bereichs des Verbundes, beinhaltet, wobei dieser Bereich vorzugsweise eine Größe von mindestens 0,01 $cm^3$, vorzugsweise mindestens 0,1 $cm^3$ und am meisten bevorzugt mindestens 0,5 $cm^3$ aufweist.

Offenbart wird auch ein Verfahren zur Herstellung eines Verbundes, wobei die durch das erfindungsgemäße Verfahren erhältlichen Superabsorber und ein Substrat und gegebenenfalls ein Zusatzstoff miteinander in Kontakt gebracht werden. Als Substrate werden vorzugsweise diejenigen Substrate eingesetzt, die bereits vorstehend im Zusammenhang mit dem Verbund genannt wurden.

Offenbart wird auch ein Verbund erhältlich nach dem vorstehend beschriebenen Verfahren, wobei dieser Verbund.

Offenbart werden auch chemische Produkte beinhaltend die wasserabsorbierenden Polymere oder einen Verbund. Bevorzugte chemische Produkte sind insbesondere Schäume, Formkörper, Fasern, Folien, Filme, Kabel, Dichtungsmaterialien, flüssigkeitsaufnehmende Hygieneartikel, insbesondere Windeln und Damenbinden, Träger für pflanzen- oder pilzwachstumsregulierende Mittel oder Pflanzenschutzwirkstoffe, Zusätze für Baustoffe, Verpackungsmaterialien oder Bodenzusätze.

Auch die Verwendung der wasserabsorbierenden Polymere oder des Verbundes in chemischen Produkten, vorzugsweise in den vorstehend genannten chemischen Produkten, insbesondere in Hygieneartikeln wie Windeln oder Damenbinden, sowie die Verwendung der wasserabsorbierenden Polymerpartikel als Träger für pflanzen- oder pilzwachstumsregulierende Mittel oder Pflanzenschutzwirkstoffe werden hier offenbart. Bei der Verwendung als Träger für pflanzen- oder pilzwachstumsregulierende Mittel oder Pflanzenschutzwirkstoffe ist es bevorzugt, dass die pflanzen- oder pilzwachstumsregulierende Mittel oder Pflanzenschutzwirkstoffe über einen durch den Träger kontrollierten Zeitraum abgegeben werden können.

## TESTMETHODEN

Sofern nicht nachfolgend anders angegeben, werden die hierin erfolgten Messungen nach ERT-Verfahren. "ERT"steht für *EDANA Recommended Test* und "EDANA" für *European Disposable and Nonwoven Association* durchgeführt. Alle Testmethoden werden grundsätzlich, wenn nichts anderes angegeben ist, bei einer Umgebungstemperatur von 23±2 °C und einer relativen Luftfeuchte von 50±10 % durchgeführt werden.

### Partikelgrößeverteilung (PSD Particle Size Distribution)

Die Partikelgrößenverteilung der wasserabsorbierenden Polymerpartikel wird analog der von der EDANA empfohlenen Testmethode Nr. WSP 220.3-10 "Particle Size Distribution" bestimmt.

**Bestimmung der "Free Swell Rate" (FSR)**

Die Bestimmung der Absorptionsgeschwindigkeit erfolgte über die Messung der sogenannten *"Free Swell Rate - FSR"* gemäß dem in der EP-A-0 443 627 auf der Seite 12 beschriebenen Testverfahren.
Der Δ-FSR - Wert entspricht dem Quotienten aus

$$\frac{FSR(SX) - FSR(VP)}{FSR(VP)}$$

**Beispiele**

Die nachfolgenden Beispiele dienen der näheren Erläuterung der Erfindung.
Die nachfolgenden erfindungsgemäßen Beispiele, zeigen den synergistischen Effekt auf den FSR-Wert durch die gleichzeitige Verwendung von Carbonat und einer sauren Verbindung und gegebenenfalls eines polymersierbaren Tensids. Bei den Beispielen wurde eine definierte PSD verwendet, um mögliche Effekte der Kornverteilung innerhalb der Beispiele auszuschließen (150μm bis 710μm in den Beispielen 1 bis 4; bzw. 150μm bis 850μm in den Beispielen 7 bis 12).Hierbei wurde eine definierte Partikelgrößenverteilung (PSD) verwendet (150μm bis 710μm). Als Standardmischung wird eine Zusammensetzung von 4 Partikelfraktionen vor der Oberflächennachvernetzung eingesetzt, die sich in den Beispielen 1 bis 4 wie folgt verteilen: 15 Gew.% einer Partikelgröße von 150 μm bis 300μm; 50 Gew.% 300μm bis 500μm; 30 Gew.% 500μm bis 600μm und 5 Gew.% 600μm bis 710μm. Die PSD wird für die Hydrogel-Polymere eingestellt. Für die Beispiele 5 und 6 wurde als Standardmischung eine Zusammensetzung von 4 Partikelfraktionen eingesetzt, die sich wie folgt verteilten: 15 Gew.% einer Partikelgröße von 150μm bis 300μm; 25 Gew.% 300μm bis 500μm; 35 Gew.% 500μm bis 710μm und 25 Gew.% 710μm bis 850μm.
In der EP1 701786 B1 wird in den Absätzen [0115 bis 0117] das (Massenmittel der Partikeldurchmesserals D50 definiert. Erfindungsgemäß wird ein Bereich zwischen 300 und 600μm bevorzugt. Besonders bevorzugt ist ein Bereich von 350 und 550μm, und ganz besonders bevorzugt ein Bereich zwischen 400 und 500μm. Bevorzugt ist ein Blähmittel, bei dem mehr als 35 Gew % der Partikel eine Teilchengröße von 100-300μm aufweisen.
Unter dem Begriff "SX", wie er in der Beschreibung verwendet wird, versteht man die thermische Oberflächennachvernetzung des Vorproduktes (VP). Das Vorprodukt entspricht dem erzeugten Hydrogel-Polymer nach der ersten Trocknung, mit der vorgenannten Kornverteilung. Grundsätzlich beziehen sich die prozentualen Angaben des Tensides auf die Acrylsäure (wenn nicht anderes erwähnt wird 320 g) und die des Carbonates auf den Ansatz (1000g).

**Beispiele**

Bei den Beispielen wurde eine definierte PSD verwendet, um mögliche Effekte der Kornverteilung innerhalb der Beispiele auszuschließen (150μm bis 710μm in den Beispielen 1 bis 4; bzw. 150μm bis 850μm in den Beispielen 5 und 6)
Als Additive wurden Pluriol® A23 R (BASF) sowie Polyether PE 7316/02 (Evonik Industries AG) eingesetzt. Grundsätzlich beziehen sich die prozentualen Angaben des Tensides auf die Acrylsäure (wenn nicht anderes erwähnt wird 640g) und die des Carbonates auf den Ansatz (normalerweise 2000g).

Verwendung ohne polymerisierbarem Tensid und Soda:

**Beispiel 1 (Referenz)**

In 1972,423g einer wässrigen Lösung aus Natriumacrylat mit einem Neutralisationsgrad von 70 mol% (bez. Acrylsäure) sowie einer gesamt Monomerkonzentration von 39,38 % wurden 1,517 g Polyethylenglycol-300-diacrylat (0,20% bez. auf Acrylsäure/Estergehalt entsprechend 84%) und 3,29 g Polyethylenglycol-(750)monoallyletheracrylat (0,40% bez. auf Acrylsäure/Estergehalt entsprechend 78%) als Vernetzer gelöst. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurde die Polymerisation durch die aufeinanderfolgende Zugabe von 0,6 g Natriumperoxodisulfat in 10 g dest. Wasser, 0,14 g 35 %ige Wasserstoffperoxidlösung in 10 g dest. Wasser und 0,03 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank.
Die Nachbehandlung der erhaltenen Vorprodukte (Beispiele 1 bis 12) erfolgte im Beispiel A durch Nacherhitzung bei 170°C über einen Zeitraum von 90min. im Trockenschrank.

Im Beispiel B durch die Beschichtung mit 3 Teilen Wasser bez. auf 100g Superabsorber sowie anschließender

Nacherhitzung bei 170°C über einen Zeitraum von 90min. im Trockenschrank;
Im Beispiel C durch die Beschichtung mit einer Lösung bestehend aus Ethylencarbonat/Wasser/Al-lactat/Alsulfat im Verhältnis 1/3/0,4/0,3% bez. auf 100g Superabsorber sowie anschließender Nacherhitzung bei 170°C über einen Zeitraum von 90min;
Im Beispiel D durch die Beschichtung mit einer Lösung bestehend aus Ethylencarbonat/Wasser/Al-lactat/Alsulfat im Verhältnis 1/3/0,3/0,2% bez. auf 100g Superabsorber sowie anschließender Nacherhitzung bei 170°C über einen Zeitraum von 90min;
Im Beispiel E durch die Beschichtung mit einer Lösung bestehend aus Ethylencarbonat/Wasser/Al-lactat im Verhältnis 1/3/0,4% bez. auf 100g Superabsorber sowie anschließender Nacherhitzung bei 170°C über einen Zeitraum von 90min;
Im Beispiel F durch die Beschichtung mit einer Lösung bestehend aus Ethylencarbonat/Wasser/Al-sulfat im Verhältnis 1/3/0,3% bez. auf 100g Superabsorber sowie anschließender Nacherhitzung bei 170°C über einen Zeitraum von 90min;
Im Beispiel G durch die Beschichtung mit einer Lösung, bestehend aus Ethylencarbonat/Wasser im Verhältnis 1/3% bez. auf 100g Superabsorber, welcher Citronensäure bis zu einem pH-Wert von ca.3,7 zugesetzt wurde sowie anschließender Nacherhitzung bei 170°C über einen Zeitraum von 90min;
Im Beispiel H durch die Beschichtung mit einer Lösung, bestehend aus Ethylencarbonat/Wasser im Verhältnis 1/3% bez. auf 100g Superabsorber, welcher Phosphorsäure bis zu einem pH-Wert von ca.3,7 zugesetzt wurde sowie anschließender Nacherhitzung bei 170°C über einen Zeitraum von 90min;
Im Beispiel I durch die Beschichtung mit einer Lösung, bestehend aus Ethylencarbonat/Wasser im Verhältnis 1/3% bez. auf 100g Superabsorber, welcher Salzsäure bis zu einem pH-Wert von ca.3,7 zugesetzt wurde sowie anschließender Nacherhitzung bei 170°C über einen Zeitraum von 90min;
Im Beispiel J durch die Beschichtung mit einer Lösung bestehend aus Ethylencarbonat /Wasser/ Natriumdihydrogencitrat im Verhältnis 1/3/1,5 bzw.0,4% bez. auf 100g Superabsorber sowie anschließender Nacherhitzung bei 170°C über einen Zeitraum von 90min;
Im Beispiel K durch die Beschichtung mit einer Lösung bestehend aus Ethylencarbonat /Wasser/ Kaliumhydrogensulfat im Verhältnis 1/3/1 bzw.0,25% bez. auf 100g Superabsorber sowie anschließender Nacherhitzung bei 170°C über einen Zeitraum von 90min und
im Beispiel L durch die Beschichtung mit einer Lösung bestehend aus Ethylencarbonat /Wasser/ Aluminium III chlorid im Verhältnis 1/3/0,15% bez. auf 100g Superabsorber sowie anschließender Nacherhitzung bei 170°C über einen Zeitraum von 90min. Die Ergebnisse für die Beispiele zu 1 sind in der Tabelle 1 zusammengefasst:

Tabelle 1 (Referenz)

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 1 | | | | | | | | 0,27 | | |
| 1A | | - | - | - | - | - | 170°C / 90min. | | 0,24 | -0,03 |
| 1B | | | 3 | - | - | | 170°C / 90min. | | 0,14 | -0,13 |
| 1C | | 1 | 3 | 0,4 | 0,3 | 3,8 | 170°C / 90min. | | 0,27 | 0,0 |
| 1G | Zitronensäure | 1 | 3 | | | 3,7 | 170°C / 90min. | | 0,27 | 0,0 |
| 1H | Phosphorsäure | 1 | 3 | | | 3,7 | 170°C / 90min. | | 0,26 | -0,01 |
| 1I | Salzsäure | 1 | 3 | | | 3,7 | 170°C / 90min. | | 0,26 | -0,01 |

Verwendung ohne polymerisierbarem Tensid und 0,5% Soda leicht

**Beispiel 2** (Referenz)

In 1963,625g einer wässrigen Lösung aus Natriumacrylat mit einem Neutralisationsgrad von 70 mol% (bez. Acrylsäure) sowie einer gesamt Monomerkonzentration von 39,55 % wurden 1,137 g Polyethylenglycol300diacrylat

(0,15% bez. auf Acrylsäure/Estergehalt entsprechend 84%) und 2,468 g Polyethylenglycol-(750)monoallyletheracrylat (0,30% bez. auf Acrylsäure/ Estergehalt entsprechend 78%) als Vernetzer gelöst. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurden 10g fein calcinierte Soda (Fa. Solvay) zugesetzt und die Polymerisation durch die aufeinanderfolgende Zugabe von 0,6 g Natriumperoxodisulfat in 10 g dest. Wasser, 0,14 g 35 %ige Wasserstoffperoxidlösung in 10 g dest. Wasser und 0,03 g Ascorbinsäure in 2 g dest. Wasser gestartet. Nachdem die Endtemperatur (ca. 100 °C) erreicht war, zerkleinerte man das Gel mit einem Fleischwolf und trocknete es 2 h bei 150 °C in einem Umlufttrockenschrank

Die Ergebnisse für die Beispiele zu 2 sind in der Tabelle 2 zusammengefasst:

Tabelle 2 *(Zugabe von 0,5% Soda)*

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 2 | | | | | | | | 0,43 | | |
| 2A | | - | - | - | - | | 170°C / 90min. | | 0,46 | 0,06 |
| 2B | | | 3 | - | - | 6,9 | 170°C / 90min. | | 0,26 | -0,3 |
| 2C | | 1 | 3 | 0,4 | 0,3 | 3,8 | 170°C / 90min. | | 0,51 | 0,18 |
| 2G | Zitronensäure | 1 | 3 | | | 3,7 | 170°C / 90min. | | 0,47 | 0,09 |
| 2H | Phosphorsäure | 1 | 3 | | | 3,7 | 170°C / 90min. | | 0,52 | 0,2 |
| 2I | Salzsäure | 1 | 3 | | | 3,7 | 170°C / 90min. | | 0,52 | 0,2 |

Verwendung mit polymerisierbarem Tensid Pluriol A23R und 0,5% Soda leicht

**Beispiel 3**

In 1944,425g einer wässrigen Lösung aus Natriumacrylat mit einem Neutralisationsgrad von 70 mol% (bez. Acrylsäure) sowie einer gesamt Monomerkonzentration von 39,94 % wurden 1,137 g Polyethylenglycol300diacrylat (0,15% bez. auf Acrylsäure/Estergehalt entsprechend 84%) und 2,468 g Polyethylenglycol-(750)monoallyletheracrylat (0,30% bez. auf Acrylsäure/ Estergehalt entsprechend 78%) als Vernetzer gelöst. Dieser Lösung wurden anschließend 19,2g einer 10%igen wässrigen Lösung des Comonomers Pluriol A23R zugegeben und die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurden 10g fein calcinierte Soda (Fa. Solvay) zugesetzt und die Polymerisation durch die aufeinanderfolgende Zugabe von 0,6 g Natriumperoxodisulfat in 10 g dest. Wasser, 0,14 g 35 %ige Wasserstoffperoxidlösung in 10 g dest. Wasser und 0,03 g Ascorbinsäure in 2 g dest. Wasser gestartet. Nachdem die Endtemperatur (ca. 100 °C) erreicht war, zerkleinerte man das Gel mit einem Fleischwolf und trocknete es 2 h bei 150 °C in einem Umlufttrockenschrank.

Die Ergebnisse für die Beispiele zu 3 sind in der Tabelle 3 zusammengefasst:

Tabelle 3 (Zugabe von 0,3% Pluriol A23R und 0,5% Soda)

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 3 | | | | | | | | 0,47 | | |
| 3A | | - | - | - | - | | 170°C / 90min. | | 0,48 | 0,01 |
| 3B | | | 3 | - | - | 6,9 | 170°C / 90min. | | 0,36 | -0,2 |
| 3C | | 1 | 3 | 0,4 | 0,3 | 3,8 | 170°C / 90min. | | 0,66 | 0,4 |
| 3G | Zitronensäure | 1 | 3 | | | 3,7 | 170°C / 90min. | | 0,58 | 0,23 |
| 3H | Phosphorsäure | 1 | 3 | | | 3,7 | 170°C / 90min. | | 0,63 | 0,34 |
| 3I | Salzsäure | 1 | 3 | | | 3,7 | 170°C / 90min. | | 0,66 | 0,4 |

*Natriumdihydrogencitrat wasserfrei (Fluka)

** Kaliumhydrogensulfat (Merck)

**Beispiel 4**

In 1960,304g einer wässrigen Lösung aus Natriumacrylat mit einem Neutralisationsgrad von 70 mol% (bez. Acrylsäure) sowie einer gesamt Monomerkonzentration von 39,62 % wurden 1,365 g Polyethylenglycol300diacrylat (0,18% bez. auf Acrylsäure/Estergehalt entsprechend 84%) und 2,961 g Polyethylenglycol-(750)monoallyletheracrylat (0,36% bez. auf Acrylsäure/ Estergehalt entsprechend 78%) als Vernetzer gelöst. Anschließend wurden 9,6 g einer 10% igen wässrigen Lösung aus PE 7316/02 zugegeben. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurden 3 g fein calcinierte Soda (Fa. Solvay) zugesetzt und die Polymerisation durch die aufeinanderfolgende Zugabe von 0,6 g Natriumperoxodisulfat in 10 g dest. Wasser, 0,14 g 35 %ige Wasserstoffperoxidlösung in 10 g dest. Wasser und 0,03 g Ascorbinsäure in 2 g dest. Wasser gestartet. Nachdem die Endtemperatur (ca. 100 °C) erreicht war, zerkleinerte man das Gel mit einem Fleischwolf und trocknete es 2 h bei 150 °C in einem Umlufttrockenschrank.

Die Ergebnisse für die Beispiele zu 4 sind in der Tabelle 4 zusammengefasst:

Tabelle 4 (Zugabe von 0,15% PE 7316/02 und 0,15% Soda)

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 4 | | | | | | | | 0,39 | | |
| 4A | | - | - | - | - | | 170°C / 90min. | | 0,37 | -0,02 |
| 4B | | | 3 | - | - | 6,9 | 170°C / 90min. | | 0,32 | 0,15 |
| 4C | | 1 | 3 | 0,4 | 0,3 | 3,8 | 170°C / 90min. | | 0,49 | 0,23 |
| 4D | | 1 | 3 | 0,3 | 0,2 | 3,8 | 170°C / 90min. | | 0,43 | 0,09 |
| 4E | | 1 | 3 | 0,4 | | 4,9 | 170°C / 90min. | | 0,48 | 0,2 |
| 4F | | 1 | 3 | | 0,3 | 2,9 | 170°C / 90min. | | 0,45 | 0,13 |
| 4K | **1,0% Kalium-hydrogensulfat | 1 | 3 | | | 0,8 | 170°C / 90min. | | 0,43 | 0,09 |

** Kaliumhydrogensulfat (Merck)

In 1969,904g einer wässrigen Lösung aus Natriumacrylat mit einem Neutralisationsgrad von 70 mol% (bez.

Acrylsäure) sowie einer gesamt Monomerkonzentration von 39,43 % wurden 1,365 g Polyethylenglycol300diacrylat (0,18% bez. auf Acrylsäure/Estergehalt entsprechend 84%) und 2,961 g Polyethylenglycol-(750)monoallyletheracrylat (0,36% bez. auf Acrylsäure/ Estergehalt entsprechend 78%) als Vernetzer gelöst. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurden 3 g fein calcinierte Soda (Fa. Solvay) zugesetzt und die Polymerisation durch die aufeinanderfolgende Zugabe von 0,6 g Natriumperoxodisulfat in 10 g dest. Wasser, 0,14 g 35 %ige Wasserstoffperoxidlösung in 10 g dest. Wasser und 0,03 g Ascorbinsäure in 2 g dest. Wasser gestartet. Nachdem die Endtemperatur (ca. 100 °C) erreicht war, zerkleinerte man das Gel mit einem Fleischwolf und trocknete es 2 h bei 150 °C in einem Umlufttrockenschrank

Die Ergebnisse für die Beispiele zu 5 sind in der Tabelle 5 zusammengefasst:

Tabelle 5 (Zugabe von 0,15% Soda)

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 5 | | | | | | | | 0,33 | | |
| 5A | | - | - | - | - | | 170°C / 90min. | | 0,19 | -0,29 |
| 5B | | | 3 | - | - | 6,9 | 170°C / 90min. | | 0,27 | -0,16 |
| 5C | | 1 | 3 | 0,4 | 0,3 | 3,8 | 170°C / 90min. | | 0,37 | 0,09 |
| 5F | | 1 | 3 | | 0,3 | 2,9 | 170°C / 90min. | | 0,37 | 0,09 |
| 5L | *0,15% Aluminium III chlorid | 1 | 3 | | | 2,7 | 170°C / 90min. | | 0,40 | 0,21 |

*AlCl3x6H2O (Merck)

Verwendung mit polymerisierbarem Tensid PE 7316/02 und 0,15% Soda leicht

**Beispiel 6**

In 1960,304g einer wässrigen Lösung aus Natriumacrylat mit einem Neutralisationsgrad von 70 mol% (bez. Acrylsäure) sowie einer gesamt Monomerkonzentration von 39,62 % wurden 1,365 g Polyethylenglycol300diacrylat (0,18% bez. auf Acrylsäure/Estergehalt entsprechend 84%) und 2,961 g Polyethylenglycol-(750)monoallyletheracrylat (0,36% bez. auf Acrylsäure/ Estergehalt entsprechend 78%) als Vernetzer gelöst. Anschließend wurden 9,6 g einer 10% igen wässrigen Lösung aus PE 7316/02 zugegeben. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurden 3 g fein calcinierte Soda (Fa. Solvay) zugesetzt und die Polymerisation durch die aufeinanderfolgende Zugabe von 0,6 g Natriumperoxodisulfat in 10 g dest. Wasser, 0,14 g 35 %ige Wasserstoffperoxidlösung in 10 g dest. Wasser und 0,03 g Ascorbinsäure in 2 g dest. Wasser gestartet. Nachdem die Endtemperatur (ca. 100 °C) erreicht war, zerkleinerte man das Gel mit einem Fleischwolf und trocknete es 2 h bei 150 °C in einem Umlufttrockenschrank.

Die Ergebnisse für die Beispiele zu 6 sind in der Tabelle 6 zusammengefasst:

Tabelle 6 (Zugabe von 0,15% PE 7316/02 und 0,15% Soda)

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 6 | | | | | | | | 0,37 | | |
| 6A | | - | - | - | - | | 170°C / 90min. | | 0,20 | -0,38 |
| 6B | | | 3 | - | - | 6,9 | 170°C / 90min. | | 0,25 | -0,25 |
| 6C | | 1 | 3 | 0,4 | 0,3 | 3,8 | 170°C / 90min. | | 0,39 | 0,05 |
| 6F | | 1 | 3 | | 0,3 | 2,9 | 170°C / 90min. | | 0,43 | 0,16 |
| 6L | *0,15% Aluminium III chlorid | 1 | 3 | | | 2,7 | 170°C / 90min. | | 0,42 | 0,14 |

*AlCl3x6H2O (Merck)

Tabelle 6 (Zugabe von 0,15% PE 7316/02 und 0,15% Soda)

| Beispiel Nr. | Zusätze [%] | EC [%] | H2O [%] | Al-lactat [%] | Al-sulfat [%] | pH-Wert der Mischung | Trocken-bedingungen | FSR (VP) [g/g/s] | FSR (SX) [g/g/s] | ΔFSR [g/g/s] |
|---|---|---|---|---|---|---|---|---|---|---|
| 6 | | | | | | | | 0,37 | | |
| 6A | | - | - | - | - | | 170°C / 90min. | | 0,20 | -0,38 |
| 6B | | | 3 | - | - | 6,9 | 170°C / 90min. | | 0,25 | -0,25 |
| 6C | | 1 | 3 | 0,4 | 0,3 | 3,8 | 170°C / 90min. | | 0,39 | 0,05 |
| 6F | | 1 | 3 | | 0,3 | 2,9 | 170°C / 90min. | | 0,43 | 0,16 |
| 6L | *0,15% Aluminium III chlorid | 1 | 3 | | | 2,7 | 170°C / 90min. | | 0,42 | 0,14 |

*AlCl3x6H2O (Merck)

## Patentansprüche

**1.** Ein Verfahren zur Herstellung einer wasserabsorbierenden Polymerzusammensetzung, umfassend die Verfahrensschritte

(**i**) Mischen von

($\alpha$1) 0,1 bis 99,999 Gew.-%, bevorzugt 20 bis 98,99 Gew.-% und besonders bevorzugt 30 bis 98,95 Gew.-% polymerisierbaren, ethylenisch ungesättigten, säuregruppenhaltigen Monomeren oder deren Salze oder polymerisierbaren, ethylenisch ungesättigten, einen protonierten oder quarternierten Stickstoff beinhaltenden Monomeren, oder deren Mischungen, wobei mindestens ethylenisch ungesättigte, säuregruppenhaltige Monomere, vorzugsweise Acrylsäure, beinhaltende Mischungen besonders bevorzugt sind,
($\alpha$2) 0 bis 70 Gew.-%, bevorzugt 1 bis 60 Gew.-% und besonders bevorzugt 1 bis 40 Gew.-% polymerisierbaren, ethylenisch ungesättigten, mit ($\alpha$1) copolymerisierbaren Monomeren,
($\alpha$3) 0,001 bis 10 Gew.-%, bevorzugt 0,01 bis 7 Gew.-% und besonders bevorzugt 0,05 bis 5 Gew.-% eines oder mehrerer Vernetzer,
($\alpha$4) 0 bis 30 Gew.-%, bevorzugt 1 bis 20 Gew.-% und besonders bevorzugt 5 bis 10 Gew.-% wasserlöslichen Polymeren, sowie
($\alpha$5) 0 bis 20 Gew.-%, bevorzugt 0,01 bis 7 Gew.-% und besonders bevorzugt 0,05 bis 5 Gew.-% eines oder

mehrerer Hilfsstoffe, wobei die Summe der Gewichtsmengen ($\alpha$1) bis ($\alpha$5) 100 Gew.-% beträgt,

**(ii)** radikalische Polymerisation unter Vernetzung, um ein wasserunlösliches, wässriges unbehandeltes Hydrogel-Polymer zu bilden,
**(iii)** Trocknen des Hydrogel-Polymers,
**(iv)** Mahlen und Absieben des Hydrogel -Polymers,
**(v)** Oberflächennachvernetzung des gemahlenen und gesiebten Hydrogel-Polymers und
**(vi)** Trocknung und Konfektionierung des wasserabsorbierenden Polymers,
wobei der wässrigen Monomerlösung, vor der Zugabe des Initiators und dem Start der radikalischen Polymerisation, 0,01 bis 5 Gew.-%, bevorzugt 0,02 bis 2 Gew. % und besonders bevorzugt 0,07 bis 1 Gew.-% eines Blähmittels mit einer Partikelgröße von 10 $\mu$m bis 900$\mu$m zugesetzt werden, bezogen auf das Hydrogel-Polymere, 0,01 bis 5 Gew.-%, bevorzugt 0,02 bis 2 Gew.-% und besonders bevorzugt 0,07 bis 1 Gew.-% mindestens eines Tensides aus der Gruppe der nicht ionischen, ionischen oder amphoteren Tenside, und in den Schritten (ii) bis (v) zusätzlich mindestens eine saure Verbindung zugesetzt wird, **dadurch gekennzeichnet, dass** das Tensid aus mindestens einer Ethylenglykol-Einheit und aus mindestens einer weiteren von der Ethylenglykol-Einheit verschiedenen Alkylenglykol-Einheit mit 3 bis 6 C-Atomen aufgebaut ist,
und **dass** mindestens eine saure Verbindung aus der Gruppe von Essigsäureanhydrid, Maleinsäureanhydrid, Fumarsäureanhydrid, Benzoesäure, Ameisensäure, Valeriansäure, Zitronensäure, Glyoxylsäure, Glykolsäure, Glycerinphosphorsäure, Glutarsäure, Chloressigsäure, Chlorpropionsäure, Zimtsäure, Bernsteinsäure, Essigsäure, Weinsäure, Brenztraubensäure, Fumarsäure, Propionsäure, 3-Hydroxy-propionsäure, Malonsäure, Buttersäure, Isobuttersäure, Imidinoessigsäure, Apfelsäure, Isethionsäure, Methylmaleinsäure, Adipinsäure, Itaconsäure, Crotonsäure, Oxalsäure, Salizylsäure, Gluconsäure, Gallussäure, Sorbinsäure, Gluconsäure und p-Oxybenzoesäure, Weinsäure, Säureanhydride, wie etwa $P_2O_5$, $SO_2$, $N_2O$ oder HCl, Mischungen dieser oder deren Salze zugesetzt werden.

**2.** Verfahren nach Anspruch 1, **dadurch gekennzeichnet, dass** die Blähmittel aus einem Pulver aus anorganischen Partikeln bestehen.

**3.** Verfahren nach einem der vorhergehenden Ansprüche, **dadurch gekennzeichnet, dass** die Blähmittel aus Sodapartikeln bestehen.

**4.** Verfahren nach einem der vorhergehenden Ansprüche, **dadurch gekennzeichnet, dass** das Blähmittel eine bevorzugte Partikelgröße von 10 $\mu$m bis 900 $\mu$m, bevorzugt 50 $\mu$m bis 500 $\mu$m und besonders bevorzugt 100 $\mu$m bis 450 $\mu$m aufweist.

**5.** Verfahren nach einem der vorhergehenden Ansprüche, **dadurch gekennzeichnet, dass** mehr als 35 Gew.-% der Blähmittel eine Teilchengröße von 100-300$\mu$m aufweisen.

**6.** Verfahren nach einem der vorhergehenden Ansprüche, **dadurch gekennzeichnet, dass** bevorzugt im Schritt (ii) oder vor dem Schritt (v) mindestens eine saure Verbindung zugesetzt wird.

**7.** Verfahren nach einem der vorhergehenden Ansprüche, **dadurch gekennzeichnet, dass** bevorzugt Salze der Schwefelsäure, Phosphorsäure und Zitronensäure alleine oder in Mischungen mit den anderen Salzen oder organischen Säuren zugesetzt werden.

**8.** Verfahren nach einem der vorhergehenden Ansprüche **dadurch gekennzeichnet, dass** die wässrige Monomerlösung mindestens ein Tensid aus der Gruppe der nicht ionischen, ionischen oder amphoteren Tenside und 0,01 bis 5 Gew.-%, Blähmittel mit einer Partikelgröße von 10 $\mu$m bis 900 $\mu$m zugesetzt werden, bezogen auf das wasserabsorbierende Polymer.

**9.** Verfahren nach einem der vorhergehenden Ansprüche, **dadurch gekennzeichnet, dass** das Tensid bevorzugt aus der Gruppe der nicht ionischen Tenside ausgewählt ist .

**10.** Verfahren nach einem der vorhergehenden Ansprüche, **dadurch gekennzeichnet, dass** das Tensid aus mindestens einer Ethylenglykol-Einheit und aus mindestens einer weiteren Einheit aus der Gruppe von Propylenglykol oder Butylenglykol, aufgebaut ist.

**11.** Verfahren nach einem der vorhergehenden Ansprüche, **dadurch gekennzeichnet, dass** das ungesättigte polymerisierbare Tensid mindestens eine endständige Funktionalitäten aus der Gruppe von Vinyl Ether-, (Meth)allyl Ether-, 4-vinylbenzyl Ether-, (Meth)acrylamid-, Methacryl Ester- oder Acryl Ester Gruppe enthält.

**12.** Verfahren nach einem der vorhergehenden Ansprüche, **dadurch gekennzeichnet, dass** die ungesättigten polymerisierbaren Tenside mindestens eine endständige Funktionalität aus der Gruppe von Vinyl Ether-, (Meth)allyl Ether-, 4-vinylbenzyl Ether-, (Meth)acrylamid-, Methacryl Ester- oder Acryl Ester Gruppe und eine nicht polymerisierbare End-Gruppenfunktionalität aus der Gruppe von Hydroxyl, Hydroxylgruppe die mit einem Rest R verethert oder mit einem Rest O=CR verestert sein kann, enthalten.

**13.** Verfahren nach einem der vorhergehenden Ansprüche, **dadurch gekennzeichnet, dass** der Rest R aus der Gruppe von linearen oder verzweigten $C_1$- bis $C_{10}$-Alkylresten, bevorzugt $C_2$- bis $C_7$-Alkylreste, besonders bevorzugt $C_3$-bis $C_4$- Alkylreste ausgewählt wird oder eine $C_6$- bis $C_{10}$-, bevorzugt $C_6$- bis $C_9$- Alkylarylgruppe darstellt.

**14.** Verfahren nach einem der vorhergehenden Ansprüche, **dadurch gekennzeichnet, dass** das ungesättigte Polyether Tensid eine Verbindung der folgenden Formel ist:

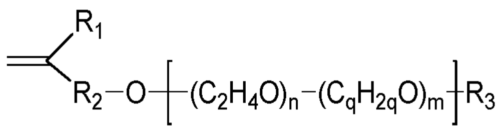

worin die Alkylenglykol-Einheiten ($C_2H_4O$) und ($C_qH_{2q}O$) statistisch, blockartig oder als Gradient verteilt sind, $R^1$ -H oder -$CH_3$ $R^2$ eine Carbonylgruppe (C=O) und $R^3$ -H, lineare oder verzweigte $C_1$- bis $C_7$-Alkyle, $C_6$- bis $C_9$-Alkylaryle oder $C_1$- bis $C_7$-Acylreste bedeuten, q für eine Zahl von 3 bis 4 steht, n und m eine Zahl von 1 bis 20, bevorzugt 2 bis 12, besonders bevorzugt 4 bis 8 bedeuten.

**15.** Verfahren nach einem der vorhergehenden Ansprüche, **dadurch gekennzeichnet, dass** das ungesättigten Polyether Tensid, eine Verbindung der folgenden Formel ist:

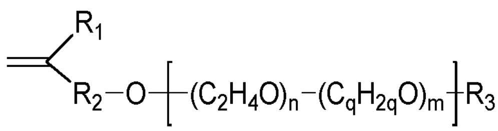

worin die Alkylenglykol-Einheiten ($C_2H_4O$) und ($C_qH_{2q}O$) statistisch oder als Gradient verteilt sind, $R^1$ -H oder -$CH_3$, $R^2$ eine Alkylengruppe aus der Gruppe von Methylen oder Ethylen, und $R^3$ -H, lineare oder verzweigte $C_1$- bis $C_7$-Alkyle, $C_6$- bis $C_9$-Alkylaryle oder $C_1$- bis $C_7$-Acylreste bedeuten, q für eine Zahl von 3 bis 4 steht, n und m eine Zahl von 1 bis 20, bevorzugt 2 bis 12, besonders bevorzugt 4 bis 8 bedeuten.

**16.** Verfahren nach einem der vorhergehenden Ansprüche, **dadurch gekennzeichnet, dass** das Tensid und das Blähmittel gemeinsam der Monomerlösung zugesetzt werden.

**17.** Wasserabsorbierendes Polymer erhältlich nach einem der Ansprüche 1 bis 14.

## Claims

**1.** A process for producing a water-absorbing polymer composition, comprising the process steps of

(i) mixing

($\alpha$1) 0.1 to 99.999% by weight, preferably 20 to 98.99% by weight and more preferably 30 to 98.95% by weight of polymerizable, ethylenically unsaturated monomers containing acid groups, or salts thereof, or polymerizable, ethylenically unsaturated monomers including a protonated or quaternized nitrogen, or mixtures thereof, particular preference being given to mixtures including at least ethylenically unsaturated monomers containing acid groups, preferably acrylic acid,
($\alpha$2) 0 to 70% by weight, preferably 1 to 60% by weight and more preferably 1 to 40% by weight of

polymerizable, ethylenically unsaturated monomers copolymerizable with (α1),
(α3) 0.001 to 10% by weight, preferably 0.01 to 7% by weight and more preferably 0.05 to 5% by weight of one or more crosslinkers,
(α4) 0 to 30% by weight, preferably 1 to 20% by weight and more preferably 5 to 10% by weight of water-soluble polymers, and
(α5) 0 to 20% by weight, preferably 0.01 to 7% by weight and more preferably 0.05 to 5% by weight of one or more adjuvants, where the sum of the weight amounts of (α1) to (α5) is 100% by weight,

(ii) radical polymerization with crosslinking to form a water-insoluble, aqueous untreated hydrogel polymer,
(iii) drying the hydrogel polymer,
(iv) grinding and sieving the hydrogel polymer to size
(v) surface post-crosslinking the ground and sieved hydrogel polymer and
(vi) drying and finishing the water-absorbing polymer,
wherein 0.01 to 5% by weight, preferably 0.02 to 2% by weight and more preferably 0.07 to 1% by weight of a blowing agent having a particle size of 10 μm to 900 μm are added, based on the hydrogel polymer, 0.01 to 5% by weight, preferably 0.02 to 2% by weight and more preferably 0.07 to 1% by weight of at least one surfactant from the group of the nonionic, ionic or amphoteric surfactants, and in steps (ii) to (v) additionally at least one acidic compound is added to the aqueous monomer solution prior to adding the initiator and before the start of radical polymerization, **characterized in that** the surfactant is formed from at least one ethylene glycol unit and from at least one further alkylene glycol unit which is different from the ethylene glycol unit and has 3 to 6 carbon atoms, and **in that** at least one acidic compound from the group of acetic anhydride, maleic anhydride, fumaric anhydride, benzoic acid, formic acid, valeric acid, citric acid, glyoxylic acid, glycolic acid, glycerophosphoric acid, glutaric acid, chloroacetic acid, chloropropionic acid, cinnamic acid, succinic acid, acetic acid, tartaric acid, pyruvic acid, fumaric acid, propionic acid, 3-hydroxypropionic acid, malonic acid, butyric acid, isobutyric acid, imidinoacetic acid, malic acid, isethionic acid, methylmaleic acid, adipic acid, itaconic acid, crotonic acid, oxalic acid, salicylic acid, gluconic acid, gallic acid, sorbic acid, gluconic acid and p-hydroxybenzoic acid, tartaric acid, acid anhydrides, for instance $P_2O_5$, $SO_2$, $N_2O$ or HCl, mixtures of these or salts thereof are added.

**2.** Process according to claim 1, **characterized in that** the blowing agents consist of a powder of inorganic particles.

**3.** Process according to any of the preceding claims, **characterized in that** the blowing agents consist of sodium carbonate particles.

**4.** Process according to any of the preceding claims, **characterized in that** the blowing agent has a preferred particle size of 10 μm to 900 μm, preferably 50 μm to 500 μm and more preferably 100 μm to 450 μm.

**5.** Process according to any of the preceding claims, **characterized in that** more than 35% by weight of the blowing agents have a particle size of 100-300 μm.

**6.** Process according to any of the preceding claims, **characterized in that** at least one acidic compound is preferably added in step (ii) or prior to step (v).

**7.** Process according to any of the preceding claims, **characterized in that** the salts of sulfuric acid, phosphoric acid and citric acid are preferably added, alone or in mixtures with the other salts or organic acids.

**8.** Process according to any preceding claims, **characterized in that** the aqueous monomer solution is admixed with at least one surfactant from the group of the nonionic, ionic or amphoteric surfactants and 0.01 to 5% by weight of blowing agent with a particle size of 10 μm to 900 μm, based on the water-absorbing polymer.

**9.** Process according to any of the preceding claims, **characterized in that** the surfactant is preferably selected from the group of the nonionic surfactants.

**10.** Process according to any of the preceding claims, **characterized in that** the surfactant is formed from at least one ethylene glycol unit and from at least one further unit from the group of propylene glycol or butylene glycol.

**11.** Process according to any of the preceding claims, **characterized in that** the unsaturated polymerizable surfactant contains at least one terminal functionality from the group of vinyl ether, (meth)allyl ether, 4-vinylbenzyl ether, (meth) acrylamide, methacrylic ester and acrylic ester groups.

**12.** Process according to any of the preceding claims, **characterized in that** the unsaturated polymerizable surfactants contain at least one terminal functionality from the group of vinyl ether, (meth)allyl ether, 4-vinylbenzyl ether, (meth) acrylamide, methacrylic ester and acrylic ester groups and an unpolymerizable end group functionality from the group of hydroxyl, hydroxyl group which may be etherified with an R radical or esterified with an O=CR radical.

**13.** Process according to any of the preceding claims, **characterized in that** the R radical is selected from the group of linear or branched $C_1$- to $C_{10}$-alkyl radicals, preferably $C_2$- to $C_7$-alkyl radicals, more preferably $C_3$- to $C_4$-alkyl radicals, or is a $C_6$- to $C_{1\ 0}$-, preferably $C_6$- to $C_9$-alkylaryl group.

**14.** Process according to any of the preceding claims, **characterized in that** the unsaturated polyether surfactant is a compound of the following formula:

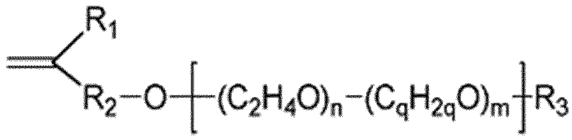

in which the alkylene glycol units ($C_2H_4O$) and ($C_qH_{2q}O$) are arranged randomly, in blocks or as a gradient, $R_1$ is -H or $-CH_3$, $R_2$ is a carbonyl group (C=O) and $R_3$ is -H, linear or branched $C_1$- to $C_7$-alkyls, $C_6$- to $C_9$- alkylaryls or $C_1$- to $C_7$-acyl radicals, q is a number from 3 to 4, n and m are each a number from 1 to 20, preferably 2 to 12, more preferably 4 to 8.

**15.** Process according to any of the preceding claims, **characterized in that** the unsaturated polyether surfactant is a compound of the following formula:

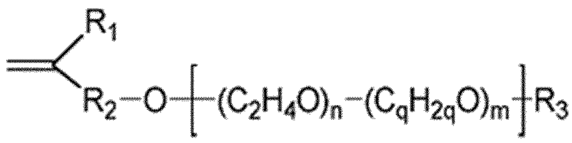

in which the alkylene glycol units ($C_2H_4O$) and ($C_qH_{2q}O$) are arranged randomly or as a gradient, $R_1$ is -H or $-CH_3$, $R_2$ is an alkylene group from the group of methylene or ethylene, and $R_3$ is -H, linear or branched $C_1$- to $C_7$-alkyls, $C_6$- to $C_9$-alkylaryls or $C_1$- to $C_7$-acyl radicals, q is a number from 3 to 4, n and m are each a number from 1 to 20, preferably 2 to 12, more preferably 4 to 8.

**16.** Process according to any of the preceding claims, **characterized in that** the surfactant and the blowing agent are added together to the monomer solution.

**17.** Water-absorbing polymer obtainable according to any of claims 1 to 14.

## Revendications

**1.** Procédé de fabrication d'une composition de polymère absorbant l'eau, comprenant les étapes de procédé suivantes :

(i) le mélange

($\alpha$1) de 0,1 à 99,999 % en poids, de préférence de 20 à 98,99 % en poids et de manière particulièrement préférée de 30 à 98,95 % en poids, de monomères polymérisables, éthyléniquement insaturés, contenant des groupes acides, ou de leurs sels, ou de monomères polymérisables, éthyléniquement insaturés, contenant un atome d'azote protoné ou quaternisé, ou de leurs mélanges, dans lequel des mélanges contenant au moins des monomères éthyléniquement insaturés, contenant des groupes acides, de préférence de l'acide acrylique, sont particulièrement préférés,
($\alpha$2) de 0 à 70 % en poids, de préférence de 1 à 60 % en poids et de manière particulièrement préférée de 1 à 40 % en poids, de monomères polymérisables, éthyléniquement insaturés, copolymérisables avec ($\alpha$1),
($\alpha$3) de 0,001 à 10 % en poids, de préférence de 0,01 à 7 % en poids et de manière particulièrement préférée

de 0,05 à 5 % en poids, d'un ou de plusieurs agents de réticulation,
($\alpha$4) de 0 à 30 % en poids, de préférence de 1 à 20 % en poids et de manière particulièrement préférée de 5 à 10 % en poids, de polymères solubles dans l'eau, ainsi que
($\alpha$5) de 0 à 20 % en poids, de préférence de 0,01 à 7 % en poids et de manière particulièrement préférée de 0,05 à 5 % en poids, d'un ou de plusieurs adjuvants, dans lequel la somme des quantités en poids ($\alpha$1) à ($\alpha$5) est de 100 % en poids,

(ii) la polymérisation radicalaire avec réticulation, afin de former un polymère hydrogel insoluble dans l'eau, aqueux, non traité,
(iii) le séchage du polymère hydrogel,
(iv) le broyage et le tamisage du polymère hydrogel,
(v) la post-réticulation de surface du polymère hydrogel broyé et tamisé et
(vi) le séchage et le conditionnement du polymère absorbant l'eau,
dans lequel de 0,01 à 5 % en poids, de préférence de 0,02 à 2 % en poids et de manière particulièrement préférée de 0,07 à 1 % en poids, d'un agent gonflant ayant une taille de particule allant de 10 $\mu$m à 900 $\mu$m sont ajoutés à la solution aqueuse de monomères avant l'ajout de l'initiateur et le début de la polymérisation radicalaire, rapporté au polymère hydrogel, de 0,01 à 5 % en poids, de préférence de 0,02 à 2 % en poids et de manière particulièrement préférée de 0,07 à 1 % en poids d'au moins un agent tensioactif issu du groupe des agents tensioactifs non ioniques, ioniques ou amphotères, et dans les étapes (ii) à (v) en outre au moins un composé acide est ajouté, **caractérisé**
**en ce que** l'agent tensioactif est constitué à partir d'au moins une unité éthylène glycol et d'au moins une autre unité alkylène glycol ayant de 3 à 6 atomes de C, différente de l'unité éthylène glycol,
et **en ce qu'**au moins un composé acide issu du groupe formé par l'anhydride d'acide acétique, l'anhydride d'acide maléique, l'anhydride d'acide fumarique, l'acide benzoïque, l'acide formique, l'acide valérique, l'acide citrique, l'acide glyoxylique, l'acide glycolique, l'acide glycérophosphorique, l'acide glutarique, l'acide chloroacétique, l'acide chloropropionique, l'acide cinnamique, l'acide succinique, l'acide acétique, l'acide tartrique, l'acide pyruvique, l'acide fumarique, l'acide propionique, l'acide 3-hydroxypropionique, l'acide malonique, l'acide butyrique, l'acide isobutyrique, l'acide imidinoacétique, l'acide malique, l'acide iséthionique, l'acide méthylmaléique, l'acide adipique, l'acide itaconique, l'acide crotonique, l'acide oxalique, l'acide salicylique, l'acide gluconique, l'acide gallique, l'acide sorbique, l'acide gluconique et l'acide p-hydroxybenzoïque, l'acide tartrique, des anhydrides d'acide, comme par exemple $P_2O_5$, $SO_2$, $N_2O$ ou HCl, des mélanges de ceux-ci ou leurs sels, sont ajoutés.

**2.** Procédé selon la revendication 1, **caractérisé en ce que** les agents gonflants sont constitués d'une poudre de particules inorganiques.

**3.** Procédé selon l'une des revendications précédentes, **caractérisé en ce que** les agents gonflants sont constitués de particules de soude.

**4.** Procédé selon l'une des revendications précédentes, **caractérisé en ce que** l'agent gonflant présente une taille de particule préférée allant de 10 $\mu$m à 900 $\mu$m, de préférence de 50 $\mu$m à 500 $\mu$m et de manière particulièrement préférée de 100 $\mu$m à 450 $\mu$m.

**5.** Procédé selon l'une des revendications précédentes, **caractérisé en ce que** plus de 35 % en poids des agents gonflants présentent une taille de particule allant de 100 à 300 $\mu$m.

**6.** Procédé selon l'une des revendications précédentes, **caractérisé en ce qu'**au moins un composé acide est de préférence ajouté dans l'étape (ii) ou avant l'étape (v).

**7.** Procédé selon l'une des revendications précédentes, **caractérisé en ce que** des sels de l'acide sulfurique, de l'acide phosphorique et de l'acide citrique sont de préférence ajoutés seuls ou en mélanges avec les autres sels ou des acides organiques.

**8.** Procédé selon l'une des revendications précédentes, **caractérisé en ce qu'**au moins un agent tensioactif issu du groupe des agents tensioactifs non ioniques, ioniques ou amphotères et de 0,01 à 5 % en poids d'agents gonflants ayant une taille de particule allant de 10 $\mu$m à 900 $\mu$m sont ajoutés à la solution aqueuse de monomères, rapporté au polymère absorbant l'eau.

**9.** Procédé selon l'une des revendications précédentes, **caractérisé en ce que** l'agent tensioactif est de préférence choisi dans le groupe des agents tensioactifs non ioniques.

**10.** Procédé selon l'une des revendications précédentes, **caractérisé en ce que** l'agent tensioactif est formé à partir d'au moins une unité éthylène glycol et d'au moins une autre unité issue du groupe du propylène glycol ou du butylène glycol.

**11.** Procédé selon l'une des revendications précédentes, **caractérisé en ce que** l'agent tensioactif insaturé polymérisable contient au moins une fonctionnalité terminale issue du groupe formé par les groupes éther vinylique, éther (méth)allylique, éther 4-vinylbenzylique, (méth)acrylamide, ester méthacrylique ou ester acrylique.

**12.** Procédé selon l'une des revendications précédentes, **caractérisé en ce que** les agents tensioactifs insaturés polymérisables contiennent au moins une fonctionnalité terminale issue du groupe formé par les groupes éther vinylique, éther (méth)allylique, éther 4-vinylbenzylique, (méth)acrylamide, ester méthacrylique ou ester acrylique, et une fonctionnalité groupe terminal non polymérisable issue du groupe formé par le groupe hydroxyle, le groupe hydroxyle qui peut être éthérifié avec un radical R ou qui peut être estérifié avec un radical O=CR.

**13.** Procédé selon l'une des revendications précédentes, **caractérisé en ce que** le radical R est choisi dans le groupe constitué par les radicaux alkyle en $C_1$ à $C_{10}$ linéaires ou ramifiés, de préférence les radicaux alkyle en $C_2$ à $C_7$, de manière particulièrement préférée les radicaux alkyle en $C_3$ à $C_4$, ou représente un groupe alkylaryle en $C_6$ à $C_{10}$, de préférence en $C_6$ à $C_9$.

**14.** Procédé selon l'une des revendications précédentes, **caractérisé en ce que** l'agent tensioactif polyéther insaturé est un composé de la formule suivante :

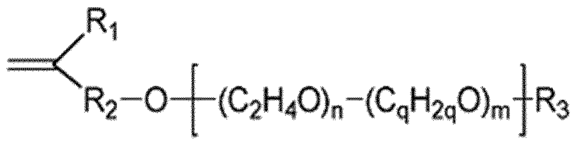

dans laquelle les unités alkylène glycol ($C_2H_4O$) et ($C_qH_{2q}O$) sont distribuées statistiquement, séquentiellement ou en gradient, $R^1$ désigne -H ou -$CH_3$, $R^2$ désigne un groupe carbonyle (C=O) et $R^3$ désigne -H, des radicaux alkyle en $C_1$ à $C_7$, alkylaryle en $C_6$ à $C_9$ ou acyle en $C_1$ à $C_7$ linéaires ou ramifiés, q représente un nombre allant de 3 à 4, n et m désignent un nombre allant de 1 à 20, de préférence de 2 à 12, de manière particulièrement préférée de 4 à 8.

**15.** Procédé selon l'une des revendications précédentes, **caractérisé en ce que** l'agent tensioactif polyéther insaturé est un composé de la formule suivante :

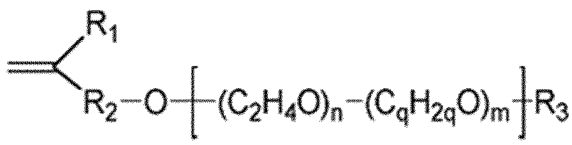

dans laquelle les unités alkylène glycol ($C_2H_4O$) et ($C_qH_{2q}O$) sont distribuées statistiquement ou en gradient, $R^1$ désigne -H ou -$CH_3$, $R^2$ désigne un groupe alkylène issu du groupe du méthylène ou de l'éthylène, et $R^3$ désigne -H, des radicaux alkyle en $C_1$ à $C_7$, alkylaryle en $C_6$ à $C_9$ ou acyle en $C_1$ à $C_7$ linéaires ou ramifiés, q représente un nombre allant de 3 à 4, n et m désignent un nombre allant de 1 à 20, de préférence de 2 à 12, de manière particulièrement préférée de 4 à 8.

**16.** Procédé selon l'une des revendications précédentes, **caractérisé en ce que** l'agent tensioactif et l'agent gonflant sont ajoutés ensemble à la solution de monomères.

**17.** Polymère absorbant l'eau pouvant être obtenu selon l'une des revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9617884 A1
- WO 2008155722 A
- WO 2008155711 A
- WO 2008155710 A
- WO 2008155702 A
- WO 2008155701 A
- WO 2008155699 A
- EP 1225857 A
- WO 0115647 A
- WO 2011120504 A
- DE 102009049450 A
- WO 2008117109 A
- WO 9711659 A
- EP 0826349 A
- WO 9837846 A
- WO 9511653 A
- WO 9511651 A
- WO 9511652 A
- WO 9511654 A
- WO 2004071363 A
- WO 0189439 A
- US 5154713 A
- EP 0644207 A
- EP 0744435 A1
- WO 2010095427 A
- EP 1858998 B1
- WO 9934843 A
- DE 19543366
- DE 19543368
- DE 19825486 A
- US 4286082 A
- DE 2706135
- US 4076663 A
- DE 3503458
- DE 4020780
- DE 4244548
- DE 4323001
- DE 4333056
- DE 4418818
- EP 0443627 A
- EP 1701786 B1


### In der Beschreibung aufgeführte Nicht-Patentliteratur


- **HOLLEMANN** ; **WIBERG**. Lehrbuch der Anorganischen Chemie. Walter de Gruyter-Verlag, 1985, 750-783
- **HOLLEMANN** ; **WIBERG**. Lehrbuch der Anorganischen Chemie. Walter de Gruyter-Verlag, 1985, 783-785
- **HOLLEMANN** ; **WIBERG**. Lehrbuch der Anorganischen Chemie. Walter de Gruyter-Verlag, 1985, 651-669
- **HOLLEMANN** ; **WIBERG**. Lehrbuch der Anorganischen Chemie. Walter de Gruyter-Verlag, 1985, 705-708